# EUROPEAN PATENT SPECIFICATION

(11) **EP 1 802 551 B1**
(45) Date of publication and mention of the grant of the patent: **27.10.2010**
(21) Application number: 05784730.3
(22) Date of filing: 05.09.2005
(51) Int. Cl.: B66F 3/35, B66F 7/08, B60P 1/64

(54) **LOAD HANDLING APPARATUS, AN INFLATABLE BAG THEREFOR, VEHICLES AND TRAILERS INCORPORATING MOVEABLE LAOD CARRYING PLATFORMS**
LASTHANDHABUNGSVORRICHTUNG, AUFBLASBARER BEUTEL DAFÜR, FAHRZEUGE UND ANHÄNGER MIT BEWEGLICHEN LASTTRAGPLATTFORMEN
APPAREIL DE MANUTENTION, POCHE GONFLABLE ASSOCIEE, VEHICULES ET REMORQUES INTEGRANT DES PLATEFORMES DE CHARGEMENT AMOVIBLES

(30) Priority: 04.09.2004 GB 0419765; 30.09.2004 GB 0421670
(43) Date of publication of application: 04.07.2007
(73) Proprietor: Middlegate Marketing Limited, Scunthorpe Lincolnshire DN15 8QZ (GB)
(72) Inventor: DIBDIN, Thomas Peter, Scunthorpe Lincolnshire DN15 8QZ (GB)
(74) Representative: Croston, David
(86) International application number: PCT/GB2005/003410
(87) International publication number: WO 2006/027558

(56) References cited:
- WO-A-01/02281
- WO-A-01/62542
- DE-A1- 2 848 651
- DE-A1- 3 421 802
- DE-B- 1 199 953
- GB-A- 2 206 158
- GB-A- 2 349 917
- US-A- 4 372 533

## Description

The present invention relates to an inflatable bag for use with a load handling apparatus. Moreover, it relates to a method of making an inflatable bag.

It is known to use inflatable bags to lift heavy loads such as large vehicles or load-carrying platforms. The pressure of the inflating fluid (e.g. air) applies a force that is distributed evenly over the surface of the bag. The lifting capacity of the bag is proportional to the contact area of the bag with the load or platform. In many designs the bag is initially flat with one side disposed on a base and the other side placed under a load or a load-carrying platform. Inflating the bag increases its height and forces the platform to move away from the base so as to move the load. The base and platform may be arranged, for example, such that they are separated in a vertical direction or, alternatively, they may be pivotally connected such that the inflation of the air bag serves to increase the angle of inclination between them. During inflation the air column (represented by the bag) and therefore displacement distance increases but there is a tendency for the contact surfaces of the bag to balloon into a generally convex shape such that the contact between the bag and the platform decreases and so the lifting capacity decreases.

Bags of this kind are generally flexible but resistant to being stretched and are impervious. They are typically manufactured from one or more sheets comprising a woven synthetic fibre, such as an aramid or a para-aramid (e.g. Kevlar ®) that is coated or impregnated with a rubber or flexible plastics material such as neoprene or polyurethane. In a single sheet design the sheet is folded and the overlapping edges at its perimeter are secured by gluing or heat (e.g. radio frequency) welding. In a design with two sheets, the sheets are overlaid and perimeter edges are secured in a similar fashion. The perimeter seams, and in particular the bag corners, are areas of weakness as there is a tendency for them to peel apart under high bag pressures. Moreover, if a glue is used it can deteriorate and fail with age. Often steps are taken to strengthen the bags by adding one or more layers in the weak areas but this adds to the manufacturing costs.

It is known to employ several bags in a vertical stack in order to increase the potential vertical displacement of the load. Moreover, it is generally possible to achieve a higher pressure with multiple bags as compared to a single bag with an equivalent air column without increasing the wall stress. The bags may be separately inflatable or, alternatively may be in fluid communication with one another and inflated from the same source. Arrangement of the bags into stacks can render the lifting apparatus unstable as there is a tendency for the bags to shift relative to one another and it is possible for one or more bags of the stack to slide out from under the load. It is therefore necessary to employ suitable tethering arrangements to avoid this problem. This again adds to the manufacturing costs.

UK patent application no. GB 2206158 describes an inflatable bag used to raise a load-carrying platform and WO 01102281 describes an airbag that is used to operate the extension or collapse of a scissor lift. DEI 199953 discloses an air filled bag for lifting a load comprising several stacked inflatable rings with gas tight bulkheads between each ring allowing the central region to be inflated in addition to the annulus.

Conventional trailers provide an enclosable space into which cargo can be loaded for carriage. Such trailers are usually provided with a rectangular frame, and a number of solid panels attached to the rectangular frame. Such trailers are mounted on a chassis comprising suitable running gear, to allow connection of the trailer to a tractor unit for haulage purposes.

In order to maximise the carrying capacity of the known trailer, it is known to lower the base of the trailer between the rear axle and the front hitch of the trailer so as to form a well. Such a modification generally allows additional goods to be stacked within the trailer on top of one another.

International Patent Application No. PCT/GB01/00279, publication No. WO 01/62542 (Insulated Structures Ltd et al) describes various mechanisms for loading a trailer. However, each of the mechanisms described in this document is suitable only for loading pallets using a forklift truck, not for carrying roll cages which are often used to carry cargo in trailers, nor for loading pallets using a manually operated pallet-barrow.

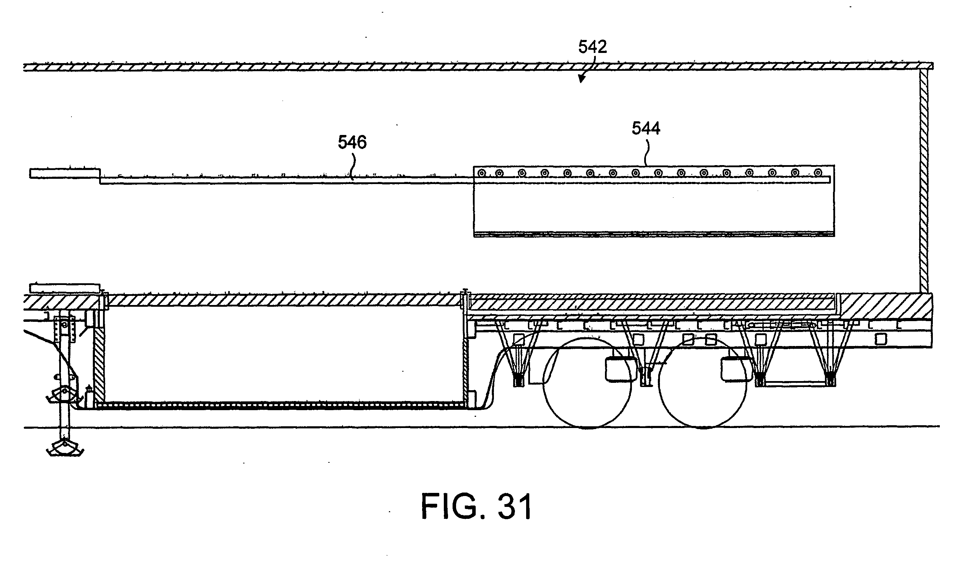

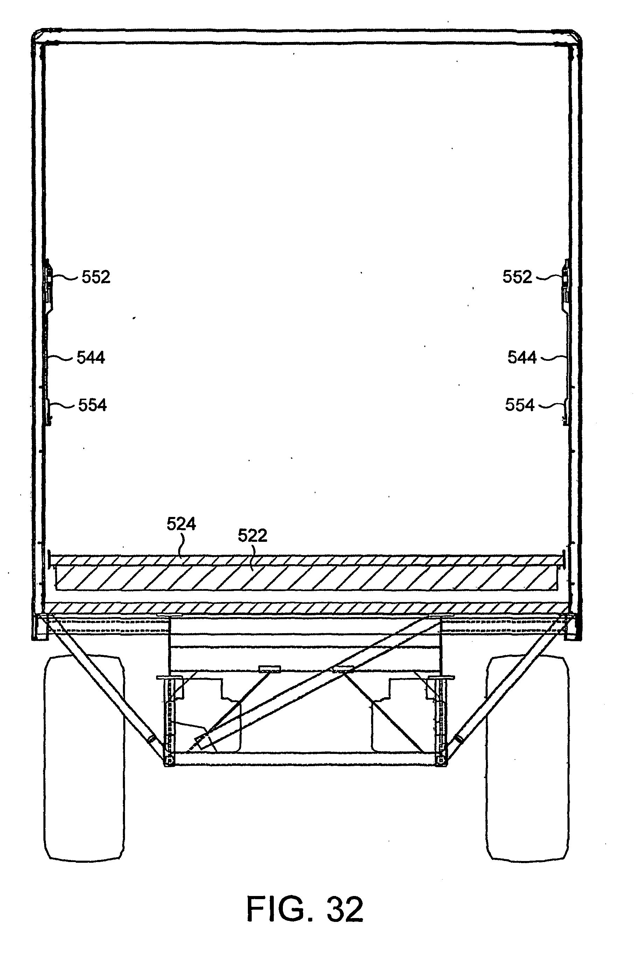

Our co-pending International Patent Application No. PCT/ GB2004/000602 describes a trailer having a load-carrying well and at least one displaceable platform on to which goods are loaded. In one embodiment there is one or more vertically displaceable platforms disposed in the well and a rear displaceable platform disposed at the rear of the trailer. The latter platform has a lower portion that moves in a vertical direction and an upper portion that can translate in a generally horizontal direction. Once the well platform is loaded the rear platform is loaded with cargo and displaced first vertically and then horizontally over the well thereby increasing the load capacity of the trailer. One of the lifting mechanisms described for elevating the platforms is a scissor jack and air bag combination (illustrated in figures 31 and 32).

This type of mechanism is described in International patent application WO 01/02281 (McNiven) and is comprised of wedge-shaped multiple compartment airbags disposed between inclined limbs of the scissor jack. The airbags are inflatable to extend the scissor jack and raise a load.

It is an object of the present invention to provide an improved inflatable bag for use in a load handling apparatus.

According to a first aspect of the present invention there is provided an inflatable bag for use in a load handling apparatus formed from an elongate tube having open ends, one end of the tube being joined to the other end of the tube so as to form an endless loop, the endless loop defining an inner volume, the bag comprising inlet means arranged to allow admission of fluid into the inner volume, the bag being arranged to be inflated or deflated for lifting or lowering a load respectively.

According to a second aspect of the invention there is provided a method of making an inflatable bag arranged to be inflated or deflated for lifting or lowering a load respectively, the method comprising the steps of:
providing a sheet of suitable bag material,
folding the sheet of bag material into a tube such that one side edge of the sheet overlaps the opposite side edge of the sheet, joining the folded tube along the overlapping side edge so as to form an elongate tube with opposite ends and an overlapping seam running longitudinally thereof,
folding the elongate tube so that one end thereof is tucked inside the other end thereof to form an overlap region, the folded elongate tube defining an endless loop having an inner volume, and
forming a seam which seals off the inner region, the seam being formed in the overlap region.

Specific embodiments of the various aspects of the present invention will now be described, by way of example only, with reference to the accompanying drawings in which:
Figures 1 to 3 show the construction of an airbag in accordance with the first and second aspects of the present invention;
Figure 4 is a schematic representation of a load handling apparatus with the airbag in a deflated condition;
Figure 5 is a schematic representation of the load handling apparatus of figure 4 but with the airbag in an inflated condition;
Figure 6 is a schematic representation of a load handling apparatus shown with the airbag in a deflated condition;
Figure 7 is a schematic representation of the apparatus of figure 6 but with the airbag shown in an inflated condition;
Figure 8 is a schematic representation of another load handling apparatus;
Figure 9 is a schematic representation of a further load handling apparatus;
Figure 10 is a perspective view of part of the load handling apparatus of figures 8 and 9, shown with the airbag removed;
Figure 11 is a schematic side view of a further load handling apparatus, shown with certain parts removed for clarity;
Figure 12 is a perspective view of a retaining member of the apparatus of figure 11;
Figure 13 is a schematic side view of another load handling apparatus, showing a scissor linkage and the bags in a deflated configuration but extended in a vertical direction;
Figure 14 is a sectioned end view of the apparatus of figure 13 but with the bags shown inflated;
Figure 15 is a schematic perspective view showing a step in the formation of an end of an inflatable bag;
Figure 16 is a schematic perspective view showing one end of the bag of figure 15, the bag being fully formed;
Figure 17 is a schematic sectioned side view of an end of the bag of figure 16 shown in the deflated condition;
Figure 18 shows the bag of figure 17 in an inflated condition;
Figure 19 is an end view looking into the rear of a trailer and shows a mechanism that is used to elevate a load-carrying platform in the trailer, the mechanism being shown in an elevated position;
Figure 20 shows the mechanism of figure 19 in a partially collapsed position;
Figure 21 depicts an alternative embodiment of the lifting mechanism of figures 19 and 20;

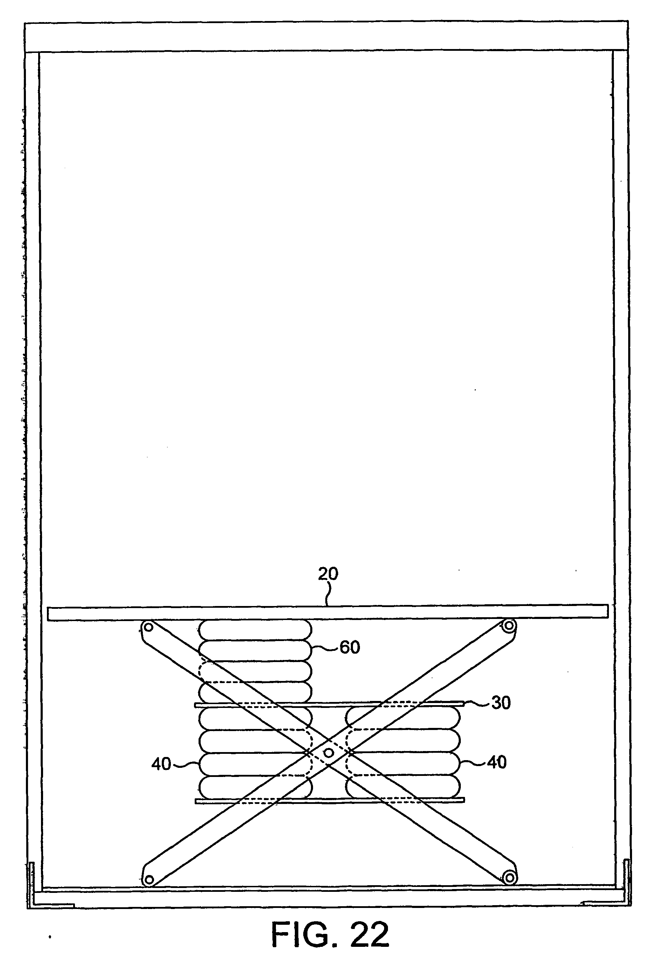

Figure 22 depicts a further alternative embodiment of the lifting mechanism of figures 19 and 20;
Figures 23a to 23f are longitudinal sectional views of a trailer and illustrate the steps on loading the trailer with cargo;
Figure 24 is a longitudinal sectional view of a trailer;
Figure 25 is an end sectional view of the trailer of figure 24 taken on line xxx - xxv;
Figure 26 is a schematic side view of an inflatable bag from the trailer in figures 24 and 25;
Figures 27 and 28 are similar views to figure 24 showing the gating feature;
Figures 29 and 30 are end views of the trailer of figures 27 and 28;
Figures 31, 36 and 37 are views similar to figure 24 showing the drive mechanism for the up and over platform,
Figures 32 and 33 are end views of the trailer of figure 31;
Figures 34 and 35 are enlarged end views showing the hanger arrangement for supporting the up and over platform;
Figures 38 to 41 are similar to that of figure 24 and show the loading sequence of the trailer;
Figures 42 and 43 are similar to that of figure 24 showing the well bracing;
Figure 44 is an end view of the trailer of figures 42 and 43;
Figure 45 is an end view of part of the up and over platform;
Figure 46 is a view similar to figure 24 showing the guide arrangement for the rear platform arrangement;
Figure 47 is an end view showing the rear platform arrangement in its initial position; and
Figures 48 to 51 are partial end views of the trailer showing the rear platform arrangement movement sequence with figure 51 shown to a large scale.

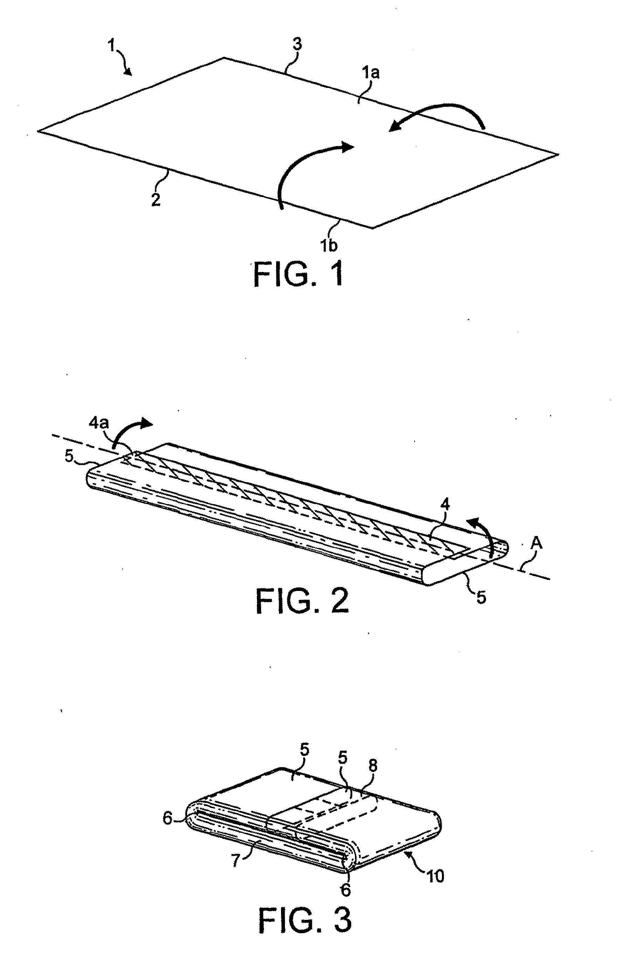

Referring now to figures 1 to 3 of the drawings, the exemplary airbag for use in load handling apparatus of the present invention is constructed from a single elongate sheet of flexible, impervious material 1 whose long side edges 2, 3 are folded inwardly (in the direction of the arrows shown in figure 1). The sheet 1 has a top face 1a and a bottom face 1b. One long side edge 2 is made to overlap the opposite side edge 3 so that the top face 1a of the sheet at the side edge 2 overlays the bottom face 1b of the sheet 1b at the side edge 3 to form an overlap portion 4. The side edges 2, 3 are then joined in the overlap position along a longitudinal seam 4a to form an open-ended flattened elongate tube (figure 2). End portions 5 of the tube are then folded inwardly towards each other about folds 6 transverse to its longitudinal axis A so that they are substantially contiguous with a remaining middle section 7 of the tube. One of the end portions 5 is inserted within the other to define a closed bag 10 in the form of an endless loop with overlapping end portions 5. A loop seam 8 is formed around the tube in the overlapping end portion to seal off the interior of the endless loop. The interior chamber of the bag is thus effectively divided into a pair of vertically stacked sub-chambers in fluid communication with one another. The longitudinal seam 4a and the loop seam 8 can be formed by, for example, heat welding, gluing or crimping or a mixture thereof.

Since the bag 10 is constructed from a single sheet of material 1 it is cheaper to manufacture. Moreover, the lack of peripheral seams is advantageous as these are areas of weakness during inflation at high pressures. The longitudinal seam 4a and the loop seam 8 provided at the end portions are both provided by overlapping surfaces of the sheet material. This means that, in use, inflation of the bag causes the seams to be loaded in shear rather than being peeled apart as in the case of a peripheral seam (known as a "peel weld") generally present in conventional bag designs. Such seams (often referred to as "shear welds") are generally around four times as strong as a conventional peel weld. The bag of the present invention is thus more resistant to leakage than current bag designs and can therefore be used at higher inflation pressures. It is preferred that the tube is folded into the bag 10 so that the longitudinal seam 4a is on the inner face of the endless loop.

It will be appreciated that the strength of the seam is determined by the width of the overlap of the two portions of sheet material and the consequent surface area of bond.

It is to be appreciated that the sheet 1 and the final closed bag 10 can be of any suitable shape for use in the present invention but generally an elongate form is most practical.

The sheet 1 is constructed from any suitable material that is impervious so as to prevent air leakage, flexible to allow easy inflation and deflation, sufficiently strong so as not to burst or puncture easily under pressure, durable so that it may be reused and generally inextensible. One example of such a material is a synthetic woven structure such as an aramid or para-aramid yam (e.g. Kevlar ®) that is impregnated or coated with a suitable rubber or rubber-like material (e.g. neoprene) or a plastics material such as polyurethane.

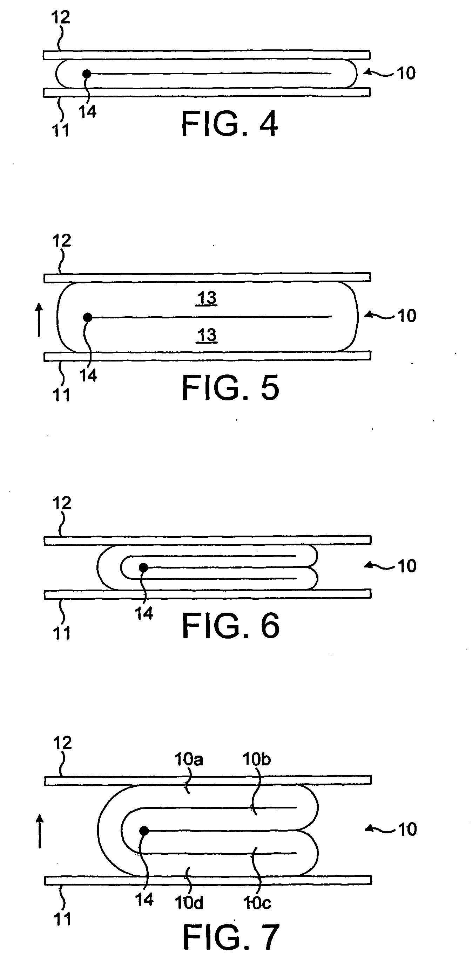

The bag 10 described above may be used as part of load handling apparatus to displace a load by inserting it between a fixed base 11 (which may be the floor, the ground or a plate) and a movable platform 12 on which the load is to be carried or otherwise supported. Such an arrangement is shown schematically in figures 4 and 5.

When the bag 10 is inflated the platform 12 is urged away from the base in the direction of the arrow in figure 5 so as to displace the load. It is to be understood that in the orientation shown the apparatus may be used to lift a load vertically but in other configurations it may be used to displace a load in other directions.

The two vertically stacked sub-chambers 13 of the bag can generally be inflated to higher pressures compared to a single bag offering the same vertical column, contact area and tensile strength on the basis that each bag has a side wall with a smaller radius than the single bag. For a thin-walled pressure vessel the hoop stress in the wall is proportional to the radius of that wall and the internal pressure in the vessel. Replacing a single chamber with multiple chambers 13 each with side walls of reduced radius allows a greater pressure to be used without increase in hoop stress in the wall. This is made possible by designing the bag such that there are not peripheral seams that are prone to peeling and therefore leakage. Moreover, the arrangement is more stable in comparison to using separate stacked bags.

Using multiple stacked bag sub-chambers means that a given lift height can be achieved by inflating each chamber to a fraction of the overall height. This is beneficial in comparison to a single airbag as each chamber is not inflated to a point where its surfaces tend to balloon outwards and thus reduce the contact area between adjacent chambers and between the chambers and the base or platform. The result is that the bag of the present invention can be inflated to lower pressures in comparison to a single bag in order to achieve any given lift height.

In order to prevent the bag 10 from shifting laterally relative to the platform 12, it can be disposed around a retaining member 14, which is shown schematically in figures 4 and 5. In the example shown in the figures the member 14 is in the form of an elongate bar that passes under the platform 12 and is fixed against lateral movement but is able to move vertically with the bag. The retaining bar 14 is received in one of the folds 15 between the two chambers defined by the bag so preventing lateral displacement of the bag. In an alternative configuration shown in figures 6 and 7, the bag 10 of figures 5 and 6 is folded in half over on to itself so as to define four overlying portions 10a-10d which each define a sub-chamber. The four stacked sub chambers are in fluid communication with one another so that they can be inflated to displace the load. The bag 10 is again folded around a retaining bar 14 that is fixed to the base 11 (or another part of the lifting device) as before. In addition to preventing lateral movement of the bag the retaining bar also prevents it from unfolding or twisting during inflation. The overlying surfaces of the bag may be joined to each other for extra stability by gluing, welding, sewing or otherwise.

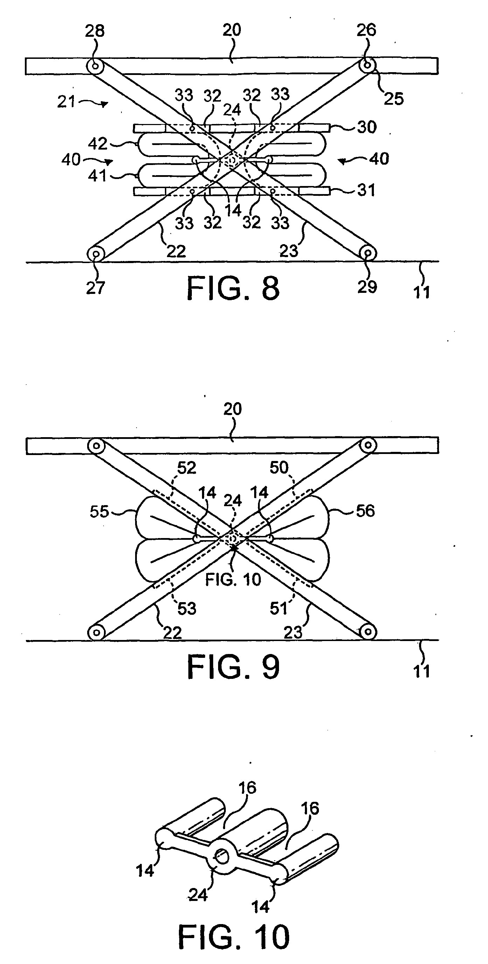

Exemplary load handling apparatus are illustrated in figures 8 and 9. Each of these mechanisms uses two bags 10 each in the folded configuration shown in figures 6 and 7 i.e. arranged so as to define four superposed chambers. It will be appreciated that the increased contact area offered by the surfaces of two bags provides for an increase in the lifting capacity of the arrangement and this means that a lower air pressure can be used to inflate the bags. It is also to be appreciated that any number of such bags (including one) could be used in each mechanism, depending on the lifting capacity required.

The lifting mechanism of both figures 8 and 9 comprises a platform 20 supported on a pair of scissor linkages 21 (one hidden behind the other) arranged one to each side and each comprising first and second beams 22, 23 that are pivotally connected intermediate their ends on a pivot shaft 24 that is common to both linkages.

On each side of the pivot shaft 24 there is fixed relative thereto a parallel bag retaining bar 14 spaced therefrom to define a clearance 16 (see figure 10) in which the bag can be received.

The first beam 22 of each linkage is provided at one end with a roller 25 mounted on a shaft 26 and designed to bear against the underside surface of the platform 20 or, alternatively, against a bearing surface (not shown) fixed to the underside of the platform. In another version of the design, a channel-shaped member may be connected to the underside of the platform to provide a guide track in which the roller 25 travels. The other end of the beam 22 is pivotally connected to the base 11 at a fixed location 27. The second beam 23 is similarly connected but in reverse with one end 28 being pivotally connected to the underside of the platform and the other end having a roller 29 so as to allow it to traverse over the floor 11. Again a guide track may be provided. Thus the beams 22, 23 of each linkage are able to pivot between collapsed and extended positions so as to lower or elevate the platform 20 as will be described below.

In the embodiment of figure 8, the scissor linkages support upper and lower vertically spaced panels 30, 31 that are disposed between the base 11 and the platform 20 and occupy planes parallel to the base 11 and the platform 20. The side edges of the panels that face the beams 22, 23 of the linkages have longitudinal slots 32 for receipt of pins 33 that are fixed to the beams and extend in a direction perpendicular to the longitudinal axes of the beams. Each pin 33 moves with the beam 22, 23 to which it is fixed and is thereby able to translate and rotate in its slot 32 so as to permit movement of the linkages between the collapsed and extended positions whilst still supporting the panels 30, 31.

The lift mechanism 8 is actuated by two inflatable bags 40 that are folded into the configuration shown in figures 6 and 7 and are interposed in a side-by-side relationship between the upper and lower panels 30, 31. The bags 40 are each folded around a respective retaining bar 14 so as to prevent them from being displaced laterally outwards during use. In this particular embodiment of the lifting device the retaining bar is optional as it may be sufficient for the vertical extent of the bag to be restricted in the space between the base 11 and the platform 20 to prevent the bag from moving laterally or unfolding. In figure 8 the panels 30, 31 and bags 40 are shown in full line throughout for clarity although it will be appreciated that they will, in part, be hidden behind the beams 22, 23 of the scissor link.

Each bag 40 has an inlet port 41 (shown on one bag only in the figures) with valve for connection to a source of compressed air or other suitable inflating fluid. The inlet ports are ideally connected to the same source to ensure simultaneous inflation. For example the source may be connected to a manifold that supplies the inflating fluid to branch conduits that are each connected to a respective inlet port 41.

A pressure relief valve 42 is also provided to prevent over-inflation.

In operation the air (or other fluid) ingresses through the inlet ports 41 and serves to inflate all the chambers of the bags 40. As the bags inflate they impart a force to the panels 30, 31 such that the latter move apart in a vertical direction. This movement is transferred to the scissor linkages via the pins 33 such that the linkage is forced to extend and thereby elevate the platform 20. As the linkages extend the rollers 25, 29 at the ends of the beams 22, 23 translate over the surfaces of the platform 20 and base 11. The slots 32 in the panels 30, 31 allow the pins 33 to translate and rotate relative to the beams 22, 23 thereby allowing relative movement between the panels 30, 31 and the linkage beams 22, 23. It will be understood that in an alternative embodiment the slots 32 could be provided along the beams 22, 23 and the pins 33 on the panels 30, 31. The mechanism is shown fully extended in figure 2.

In order to lower the platform 20 the process is reversed by opening an outlet valve. This allows the bags to deflate and the scissor linkages to move to the collapsed position under the weight of the platform 20 and any load carried by it.

During inflation the compartments of the bags 40 inflate substantially simultaneously so as to provide a stable and controlled lifting movement. The bags 40 are designed to withstand high pressures.

In the alternative exemplary embodiment of figure 9, the parallel panels are replaced with inclined panels 50 to 53 that are fixed between the scissor linkages on each side. There are four panels in all, a first 50 being fixed between upper portions of the first beams 22 of each of the linkages, a second 51 between lower portions of the second beams 23, a third 52 between upper portions of the second beams 23 and a fourth 53 between lower portions of the first beams 22. The air bags 55, 56 are again folded around the retaining bars 14 and interposed between adjacent panels on adjacent beams. A first air bag 55 is disposed between the first and second panels 50, 51 and a second airbag 56 is disposed between the third and fourth panels 52, 53.

Inflation of the bags 55, 56 causes them to expand against the panels 50 to 53 and adopt a general wedge shape. This action forces the panel pairs 50 and 51, 52 and 53 to move apart such that the angle between them (and therefore the beams to which they are fixed) increases thereby extending the scissor linkages to raise the platform 40.

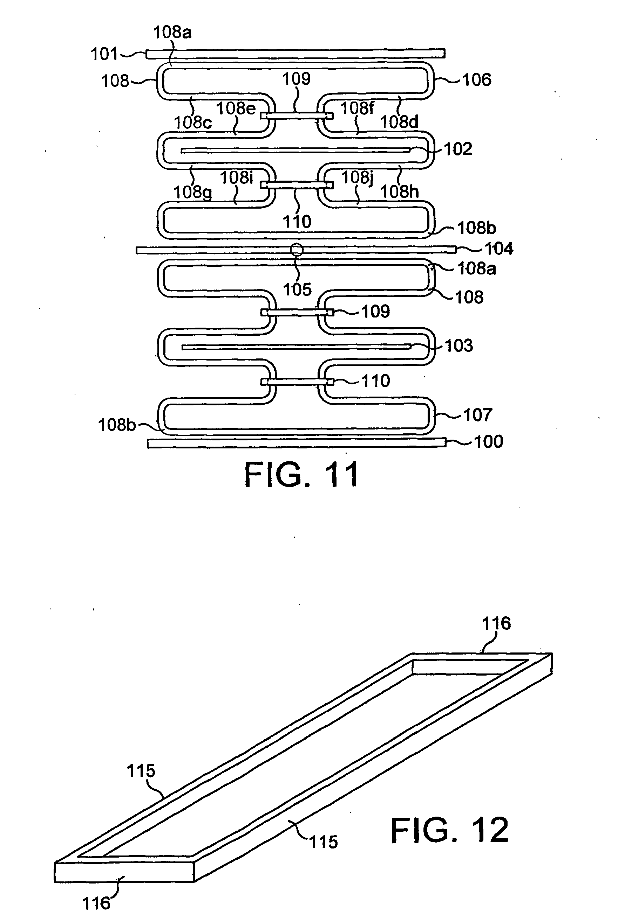

The embodiment of figure 11 illustrates load handling apparatus similar to that described previously but with an alternative bag configuration. In this figure the scissor linkage has been removed for clarity and the bag is shown in highly schematic form. The apparatus again comprises a base 100 and a platform 101 between which the scissor linkage extends and parallel intermediate panels 102, 103 to which the beams of the scissor are connected in the same manner as that described above in relation to figure 8. In this embodiment there is a further central plate 104, parallel to the floor 100, platform 101 and intermediate panels 102, 103, the plate 104 being pivotally mounted on the central pivot shaft 105 of the linkage. This arrangement allows two inflatable bags 106, 107 to be used: one between the central plate 104 and the platform 101 and the other between the central plate 104 and the floor 100. In figure 11, the bags are shown deflated but are depicted extended in a vertical direction so as to make their folded configurations clear. Each bag 106, 107 comprises an endless loop chamber 108 as before but is folded around the intermediate panel 102, 103 such that the chamber 108 is formed into a convoluted, approximately sinuous configuration, as illustrated in figure 11, thereby to define multiple superposed sub chambers. The uppermost and lowermost sub-chambers 108a, 108b of the bag extend across substantially the full length of the platform and central plate, whereas the intermediate sub-chambers 1-08c to 108j each extend across only half of the length. The bag is folded such that pairs of intermediate sub-chambers are disposed side-by side essentially in the same horizontal plane. In the embodiment shown there are four pairs of intermediate sub-chambers 108c to 108j disposed between the uppermost and lowermost sub-chambers 108a and 108b of each bag 106, 107; two above and two below the intermediate panel 102, 1-03. Two retaining members comprising rectangular loops 109, 110 of rigid material (e.g. steel) serve to hold the bag in the folded configuration: one such loop 109 being disposed between the two intermediate sub-chamber pairs 108c,d,e,f above the intermediate panel 102 and the other 110 between those pairs 108 g, h, i, j below the intermediate panel 103.

The provision of an endless loop inflatable chamber 108 divided into multiple superposed sub-chambers that are vertically stacked and supported by the central plate 104 and intermediate panels 102, 103 ensures greater stability in comparison to the multiple bags of the prior art lifting arrangements. As indicated above the use of an endless loop chamber provides for a much stronger bag without peel welds and the arrangement of multiple sub-chambers can result in reduced inflation pressures for a given lift height.

The use of a central plate and intermediate panels provide stability in that the bag can be supported on and/or folded around them. This permits the employment of more bags or the division of a bag into more sub-chambers thereby providing a higher lift capacity and/or a reduced inflation pressure for a given height. In tests by the application it has been established that the arrangement of the present invention was able to lift a given load through a given height at 7psi which compares to an inflation pressure of 30psi using a prior art bag design.

By using a large radius bag, for example 50cm, the inflation pressure required to lift a load can be substantially reduced to below 3psi for normal loads.

The pivotal mounting of the central plate 104 ensures that bag movement can be accommodated without applying stress to the scissor linkage.

The retaining loops 109, 110 are designed to retain the bags in the folded configuration whilst allowing relative rolling and/or sliding movement of adjacent bag surfaces during inflation or deflation. An example of one such loop is shown in figure 12. It comprises two parallel, spaced, elongate beams 115 that are interconnected by perpendicular short beams 116 at each end.

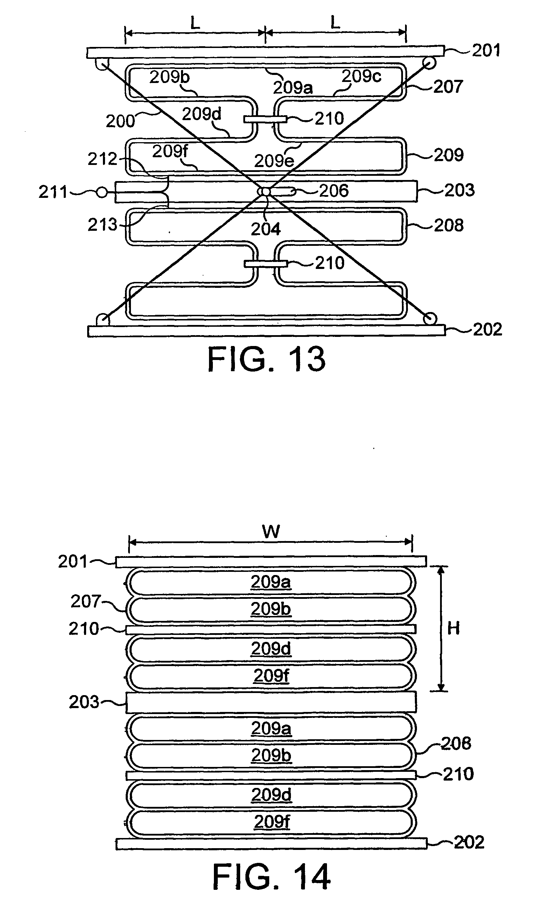

The embodiment of figures 13 and 14 illustrates an alternative arrangement that does not include the intermediate panels. However, it will be appreciated that this configuration can be adopted with the intermediate panels present. In this instance the scissor linkage 200 is shown in figure 13 so as to illustrate its connection to the central plate 203. The platform 201 and base 202 are connected to the scissor linkage 200 in the same manner as the embodiments of figures 8 and 9. A central plate 203 interposed between the platform and base is supported on the central pivot shaft 204 of the scissor linkage 200. The plate 203 has a slot 206 in which the shaft 204 is received such that both rotational and lateral movement of the shaft is accommodated during collapse or extension of the scissor linkage 200.

Upper and lower bags 207, 208 are disposed between the platform 200 and central plate 203 and the base 201 and central plate 203 respectively. Each bag again defines a single chamber 209 in the form of an endless loop and is folded so as to define a plurality of vertically superposed sub-chambers 209a to 209h as in the embodiments described previously. In particular, each bag is folded inwardly at opposed locations of the loop to define a convoluted chamber. The bag chamber is divided into upper and lower sub-chambers 209a, 209f that extend substantially along the length of the lifting apparatus and two pairs of intermediate sub-chambers 209b,c and 209d,e. The sub-chambers of each pair 209b,c and 209d,e extend half way across the length of the apparatus and combine to be substantially coterminous with the upper and lower chambers 209a and 209f The folded configuration of the bag is supported by retaining loops 210 that are disposed between the two pairs of subchambers. The design of the retaining loops 210 is the same as that described above in the embodiment of figure 11 and 12.

It will be appreciated that in another embodiment (not shown) the bags may be folded around intermediate panels disposed between those bag portions that define the uppermost or lowermost sub-chamber 209a or 209f and the adjacent pair of intermediate sub-chambers.

An outlet of the source of inflating fluid is connected to a manifold 211 that directs the inflating fluid to a pair of branch conduits 212, 213 each conduit supplying an inlet of a respective bag. The manifold is located, in part, within the central plate with one branch directed upwardly to connect to the lowermost sub-chamber of the upper bag and the other directed downwardly to connect to the uppermost subchamber of the lower bag. This arrangement ensures that the bags are inflated simultaneously and that the bag pressures are equalised at all times thus reducing the stress on the scissor linkage in the event of failure of one of the bags. It will be appreciated that the manifold can be used in any configuration where there is more than one bag.

In any of the embodiments described, the scissor linkage could be dispensed with altogether providing an appropriate guiding arrangement is provided for the platform 20, 101, 200 as will be described later.

The arrangement ensures that the bag surfaces in contact with the floor and platform are maximised so that the bag pressure and therefore tensile stress can be reduced for a given load and lifting height.

The bag surface may be embossed to allow the surfaces of the overlying portions to slide over each other during inflation or deflation. It will be appreciated that other kinds of finishing treatments to the bag surface may be applied in order to achieve this purpose.

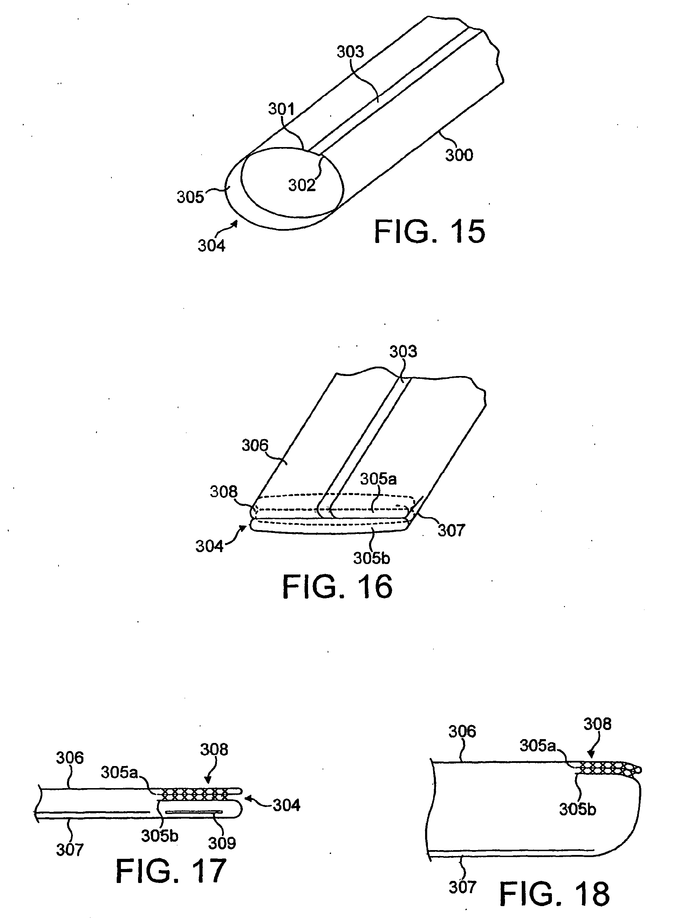

An alternative bag configuration is shown in figures 15 to 18. This bag may be used in any of the load handling apparatus designs described above instead of the endless loop chamber bag. The alterative bag configuration is elongate in the form of a flattened tube as before but does not define an endless loop chamber. Instead the bag has sealed ends that are designed such that the seams are not in the form of "peel welds" but are rather shear welds. The bag may be folded in the same configurations as the endless loop chamber bag described above and differs only in that the ends are not joined together. It has all the advantages of afforded by the endless loop chamber bag as described above.

Figure 15 shows the first stage in the construction of the alternative bag configuration. A single sheet of material 300 of the kind described before is formed into a tube and overlapping edges 301, 302 of the material are fixed at a longitudinal seam 303 that is parallel to the axis of the tube. The ends 304 of the bag (one only shown in the figures) are each folded inwardly to form an in-turned portion 305 as shown in figure 15. The tube is then flattened as shown in figure 16 to form opposed walls 306, 307 and the opposing halves 305a, 305b of the in-turned portion 305 are joined together to form a seam 308 that closes the end 304 of the bag. The seams 303, 308 are achieved by placing the overlapping edges 301, 302 or the in-turned portions 305 between a pair of electrodes (not shown) and subjecting them to dielectric heating by applying a high frequency voltage between the electrodes for a predetermined period. The resulting high frequency (e.g. radio frequency) electric field causes the polyurethane (or other suitable thermoplastics) material in the bag in the area between the electrodes to fuse so as to bond the overlapping edges or portions together. This dielectric heating method is well known in the art and is often referred to as r.f. welding.

It is important that the two halves 305a, 305b of the in-turned portion 305 not only bond together but that they are bonded to the interior surface of only one of the walls 306 of the flattened bag. The material is prevented from fusing to the other wall 307 by inserting a thin blank 309 of suitable material between the relevant wall 307 and the in-turned portion 305b. The blank material has a different dielectric loss index or a higher thermal capacity such that it does not fuse to the bag material on each side when subjected to the electric field. The resulting seam, illustrated in figures 17 and 18, is configured such that when the bag is inflated (see figure 18) it forms part of the wall 306 and is subjected to shear loads only. The result is a much stronger bag that can be inflated to pressures that are significantly in excess of those in comparison to prior art bag designs without leakage. It will be appreciated that the greater the depth of the seam the better the seal.

The inlet to the endless loop 10 may be formed in a similar way to that shown in fig 1. By taking a smaller piece of impervious bag material and laying it onto the endless loop as shown in fig 3, holes can be formed through the sheet and the outer wall of the loop 10. The sheet can then be secured to the loop 10 by means of gluing, welding or rivetting. The sheet can then be folded and glued as shown in figs 1 and 2 to form an inlet tube. One end can be sealed off using the seal shown in figs 17 and 18. Thus, by blowing air into the tube, air will pass through the holes formed in the tube and loop walls and enter the bag 10.

The bag may contain a mesh of thin plastics or other material that extends substantially along the full interior length of the chamber. This assists in ensuring that the inflating fluid is distributed from the inlet port along the full length of the bag more efficiently. A mesh could be used in the endless loop chamber bag described above. Any kind of reticulated membrane may be used in place of the mesh. The load handling apparatus of the kind described above is particularly suitable for use in raising and lowering cargo-carrying platforms in articulated trailers or other vehicles. Examples are described in International Patent Application nos. PCT/GB01/00279 and PCT/GB04/000602.

It will be appreciated that numerous modifications to the above described design may be made without departing from the scope of the invention as defined in the appended claims. For example, the airbag may be folded any convenient number of times to provide multiple stacked chambers. Moreover, it is to be understood that the bags may be used with any suitable type of load handling apparatus. Finally in the embodiments using a scissor lift it is to be understood that any number of linkages may be used for any given platform.

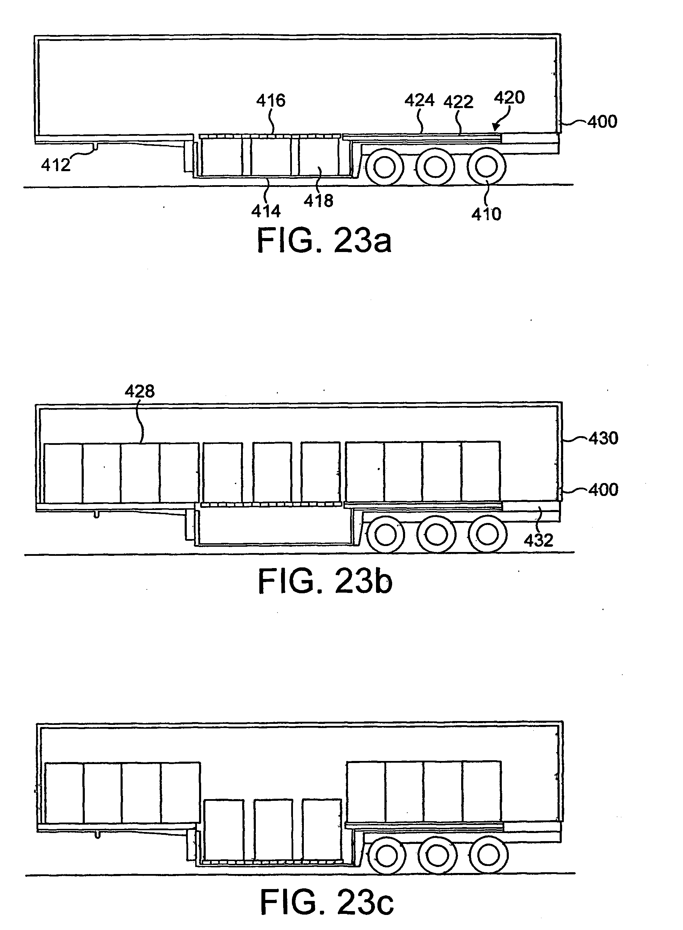

Figures 23a to 23f show a trailer 400 having three rear axles supporting wheels 410 and a front hitch 412 (which may also be referred to as a king pin, and which typically is received in the fifth wheel of the tractor unit). It can be seen that a central part of the floor of the trailer between the wheels 410 and the front hitch 412 is lower than front and rear floor sections, so as to allow additional cargo to be carried in the lower part of the trailer which is hereinafter referred to as a well 414. It can be seen that, in this example, the well 414 is provided with a vertically moveable platform 416 which can be raised and lowered by the action of a lifting mechanism 418 (shown in schematic form in figure 23a only). In other embodiments, the well 414 may be provided with a different number of platforms 416. Examples of other trailer embodiments are described in WO 01162542 and PCT/GB2004/000602.

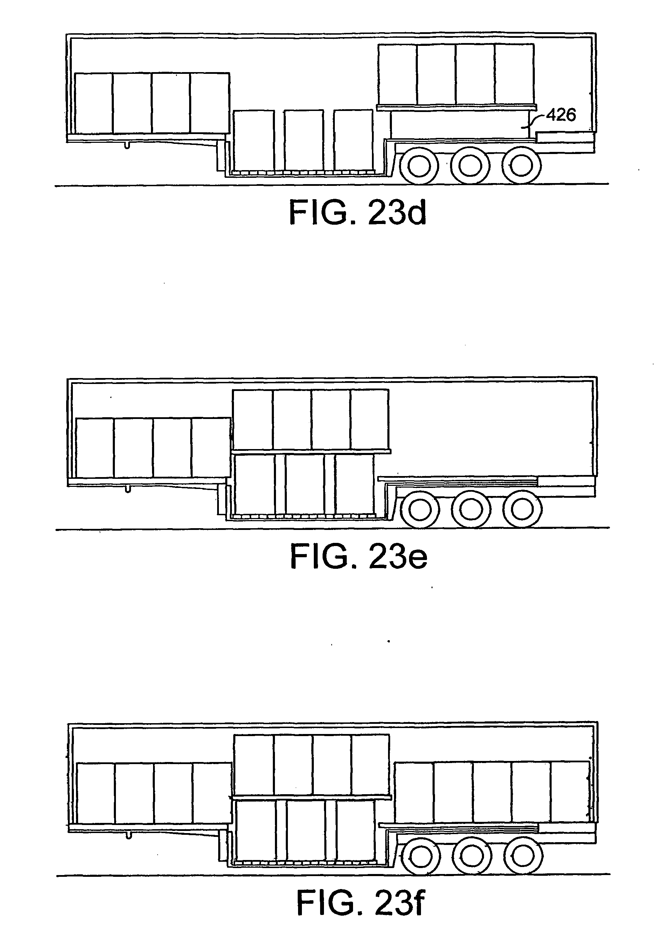

In the embodiment shown in figure 23a, a rear part of the trailer 400 is provided with a double platform structure 420, that is a vertically moveable platform 422, and a longitudinally moveable platform 424. In use, the vertically moveable platform 422 is lifted by a lifting mechanism 426 (shown schematically in figure 23d) such that the longitudinally moveable platform 424 can be moved forwards in tracks (not shown) formed at either side of the trailer 400 at an appropriate height. The operation of this double platform structure is described in our co-pending international patent application PCT/GB2004/000602 and will therefore not be described in detail here.

Referring to figure 23b, it can be seen that pallets 428 have been loaded into the trailer 1. This loading can be achieved by using a fork-lift truck, roll cages or a manually operated pallet barrow. In each case the cargo enters the trailer through a rear door 430. The first cargo to be loaded is moved across the longitudinally moveable platform 424 which is positioned so as to be level with a rear floor 432 of the trailer 400. The cargo is then moved over the platform 416 which is initially level with the longitudinally moveable platform 424, to the front most portion of the floor of the trailer. Subsequent pallets 428 are loaded on to the vertically movable platform 416 and finally the rear double platform structure 420 is loaded with pallets 428. When the pallets have been loaded, the vertically moveable platform 416 is moved downwards such that it is positioned on a floor of the well 414 of the trailer. This configuration is shown in Figure 23c.

Referring to figure 23d, the vertically moveable platform 422 is moved upwards such that the longitudinally moveable platform 424 is vertically aligned with the tracks which are provided by the sides of the trailer. In this position, the longitudinally moveable platform 424 carrying the pallets 428 can be moved forward in the tracks, to adopt the position shown in figure 23e. Finally, the platform 422 is lowered and further pallets 428 are loaded on to it at the rear of the trailer as shown in figure 23f.

It will be appreciated from the foregoing description that the present invention allows space usage within the trailer 400 to be optimised, given that the pallets 428 are carried on a platform 424 located above the pallets 428 in the well 414. Furthermore the present invention is advantageous, because all loading positions can be accessed using a manually operated pallet barrow without the need for a forklift truck. However, it will be appreciated that the invention can be used with a forklift truck if desired. Additionally, the invention can be used with roll cages, if it is desired to carry cargo in this way. Also, although the up-and-over platform arrangement has been shown in a trailer, it will be apparent that this arrangement may also be used with advantage in cargo-carrying vehicles with no detachable trailer.

Furthermore, the lifting and forwardly extending double-platform arrangement may provide advantages in cargo carrying vehicles and trailers that do not possess wells, although when used in conjunction with load carrying wells the arrangements are particularly advantageous.

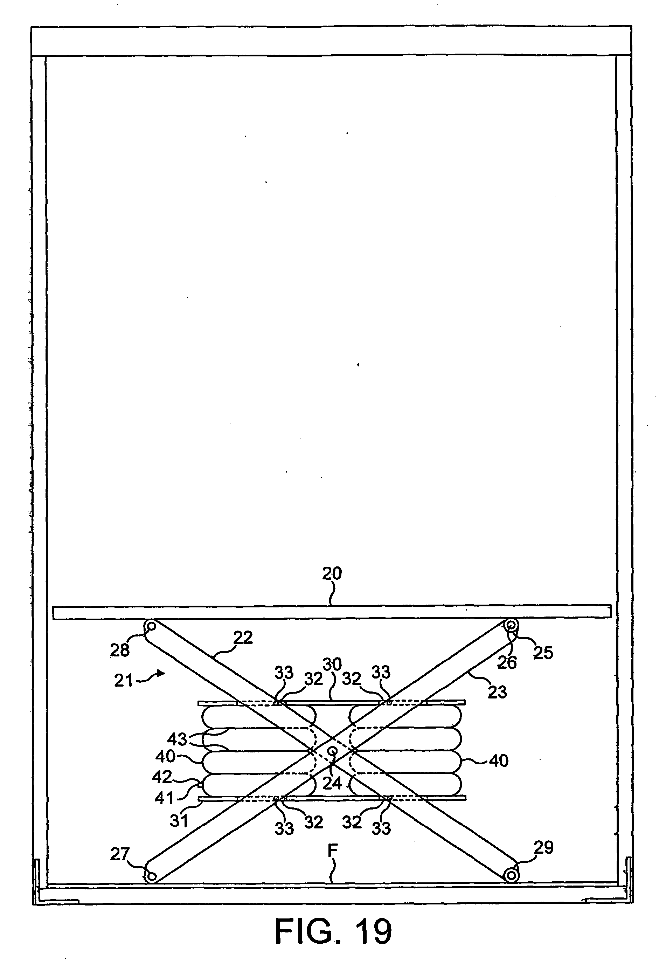

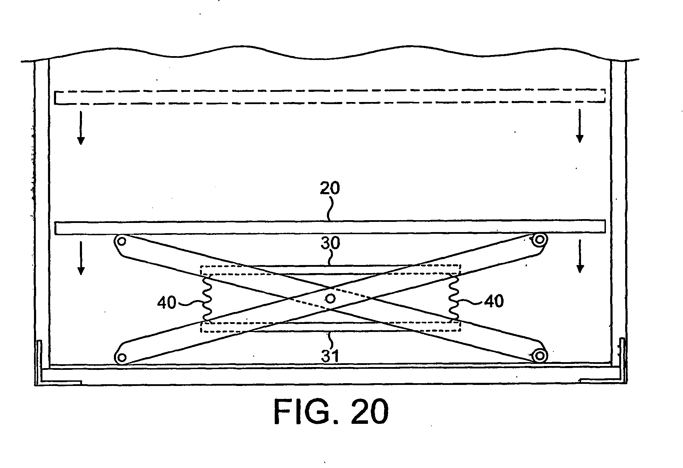

Figures 19 and 20 illustrate a lifting mechanism that may be used to raise or lower the well platform 416 or the rear platform arrangement 420.

In these illustrations a generic load-carrying platform is designated by the reference numeral 20 and parts corresponding to parts in figure 8 carry the same reference numerals. The platform is supported on a pair of scissor linkages 21 (one hidden behind the other in the view of figures 19 and 20) arranged one to each side and each comprising first and second beams 22, 23 that are pivotally connected intermediate their ends on a pivot shaft 24 that is common to both linkages.

The first beam 22 of each linkage is provided at one end with a roller 25 mounted on a shaft 26 and designed to bear against the underside surface of the platform 20 or, alternatively, a bearing surface fixed to the underside of the platform. In another version of the design, a channel-shaped member may be connected to the underside of the platform to provide a guide track in which the roller 25 travels. The other end of the beam 22 is pivotally connected to the floor at a fixed location 27. The second beam 23 is similarly connected but in reverse with one end 28 being pivotally connected to the underside of the platform and the other end having a roller 29 so as to allow it to traverse over the floor F. Again a guide track may be provided. Thus the beams 22, 23 of each linkage are able to pivot between collapsed and extended positions so as to lower or elevate the platform 20 as will be described below.

The scissor linkages support upper and lower vertically spaced panels 30, 31 that are disposed between the floor F and the platform 20 and occupy planes parallel to the floor and the platform. Each of the panels 30, 31 comprises a pair of planar sheets of steel or other suitable material that are joined by reinforcing webs as necessary. The side edges of the panels that face the beams 22, 23 of the linkages have longitudinal slots 32 for receipt of pins 33 that are fixed to the beams and extend in a direction perpendicular to the longitudinal axes of the beams. Each pin 33 moves with the beam 23, 23 to which it is fixed and is thereby able to translate and rotate in its slot 32 so as to permit movement of the linkages between the collapsed and extended positions whilst still supporting the panels 30, 31.

The lift mechanism is actuated by two inflatable bags 40 that are interposed in a side-by-side relationship between the upper and lower panels 30, 31. The bags 40 each comprise multiple compartments that are each defined by a single sheet of material that is folded over, bonded at its peripheral edges and bonded to an adjacent bag compartment. The bag material is constructed from an impervious flexible material. An example of a suitable material is a synthetic woven fabric such as Nylon ® or Kevlar ® based fabric that is coated or impregnated with polyurethane but it is to be appreciated that other materials may be used. The peripheral edges and the facing surfaces of adjacent bags may be bonded by, for example, heat welding. Alternatively, a bag as described in figures 1 to 7 could be used.

In the example shown, the lowermost compartment of each bag 40 has an inlet port 41 (one only shown) with valve 42 for connection to a source of compressed air or other suitable inflating fluid. Each of the bag compartments are in fluid communication with the others by means of passages 43 which are represented in dotted line in the bag on the left hand side only of figure 19. In operation the compressed air (or other fluid) ingresses through the inlet ports 41 and serves to inflate all compartments of the bags 40. As the bags inflate they impart a force to the panels 30, 31 such that the latter move apart in a vertical direction. This movement is transferred to the scissor linkages via the pins 33 such that the linkage is forced to extend and thereby elevate the platform 20. As the linkages extend the rollers 25, 29 at the ends of the beams 22, 23 translate over the surfaces of the platform 20 and floor F. The slots 32 in the panels 30, 31 allow the pins 33 to translate and rotate relative to the beams 22, 23 thereby allowing relative movement between the panels 30, 31 and the linkage beams 22, 23. It will be understood that in an alternative embodiment the slots 32 could be provided along the beams 22, 23 and the pins 33 on the panels 30, 31. The mechanism is shown fully extended in figure 19.

In order to lower the platform 20 the process is reversed by opening an outlet valve. This allows the bags to deflate and the scissor linkages to move to the collapsed position (see figure 20) under the weight of the platform 20 and any load carried by it.

During inflation the compartments of the bags 40 inflate substantially simultaneously so as to provide a stable and controlled lifting movement. The bags 40 are designed to withstand high pressures. Restricting the vertical dimension of the bags to that between the panels 30, 31 provides improved stability as the height (and footprint) of the bags is reduced in comparison to a bag that extends between the floor and the platform. Moreover, the vertical distance through which the linkages and therefore the platform can travel is not compromised.

The advantage of the scissor lift arrangement is that it can collapse to a very flat configuration, and so takes up a small volume in the trailer/vehicle. The mechanism is shown approaching the fully collapsed position in figure 20. Moreover, the mechanism ensures that the platform 20 is raised or lowered in a smooth movement whilst maintaining it in a level horizontal plane.

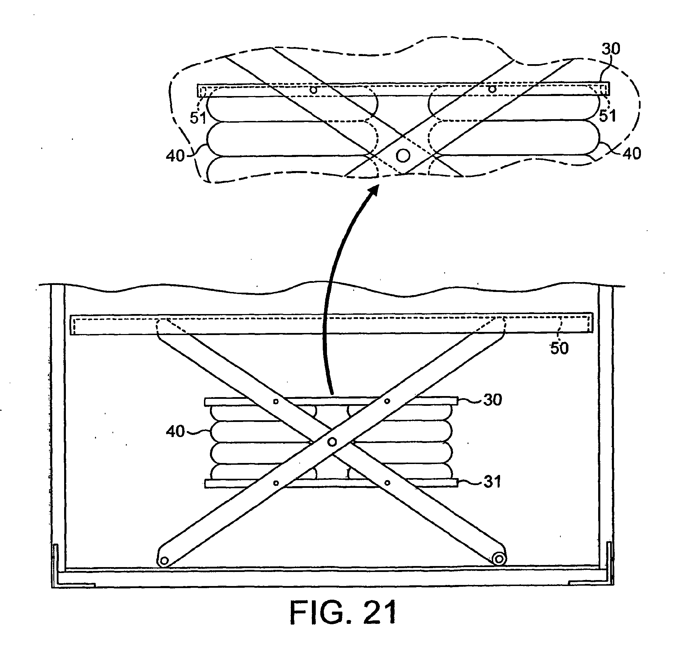

A modified version of the lift mechanism is illustrated in figure 21 which shows the platform and panels having recesses 50, 51 for accommodating the bags and the collapsed beams of the linkage. This allows the mechanism to occupy a smaller volume in the collapsed configuration. A further modified version of the lift mechanism shown in figure 5. In this embodiment there is provided a further bag 60 interposed between the platform 20 and the upper panel 30. This provides an additional lifting capacity and is particularly useful if one of the other bags ruptures.

It is to be appreciated that the pair of scissor linkages may be replaced with a single linkage. Moreover, the rollers at the end of the linkage beams can be replaced by sliders of any suitable low friction material.

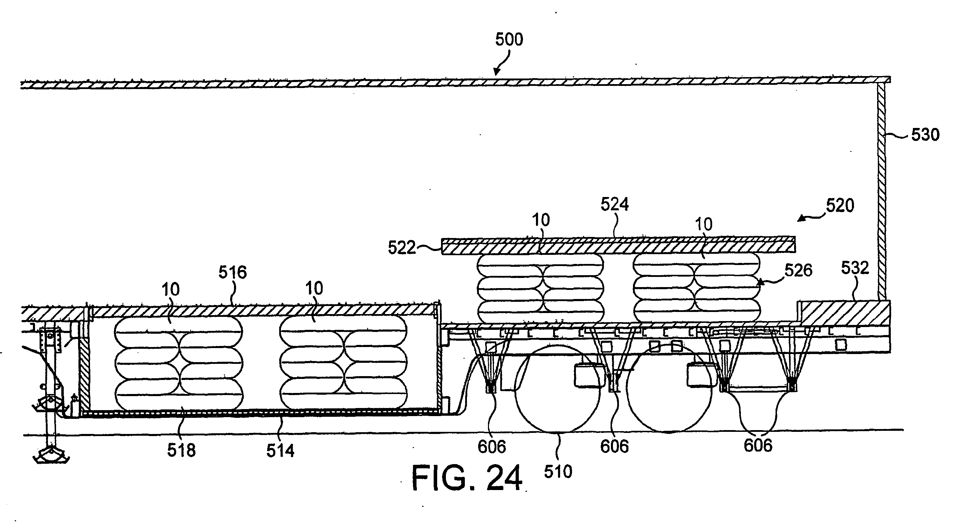

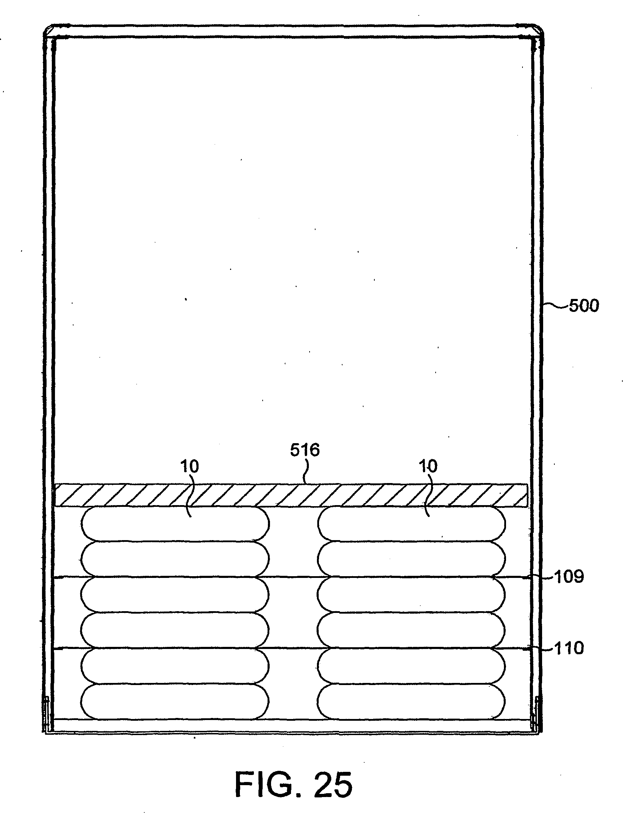

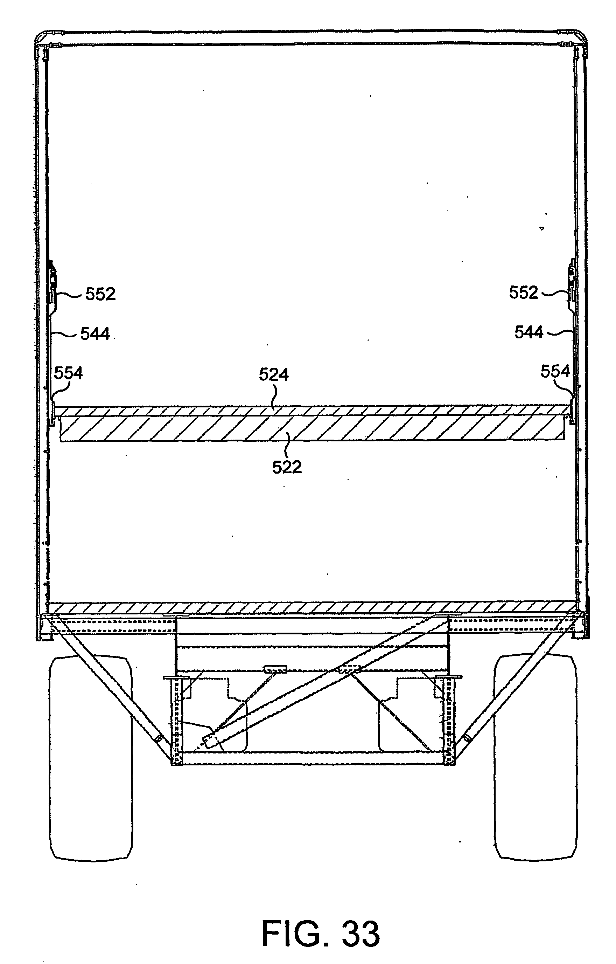

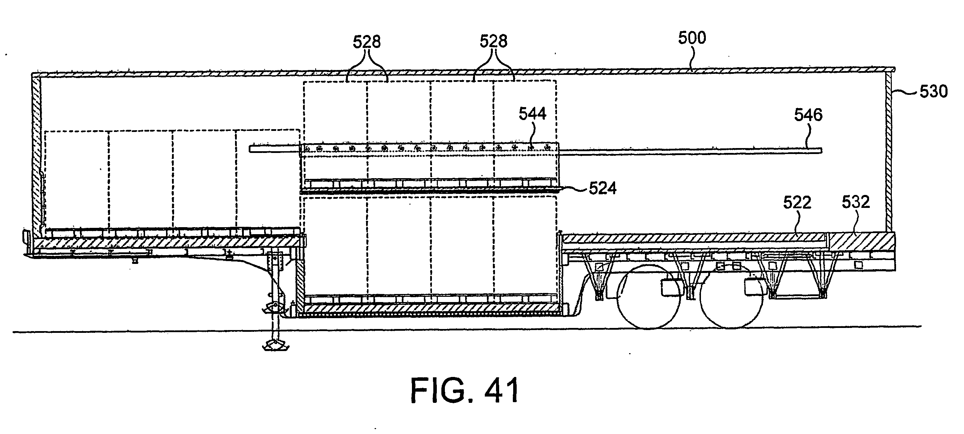

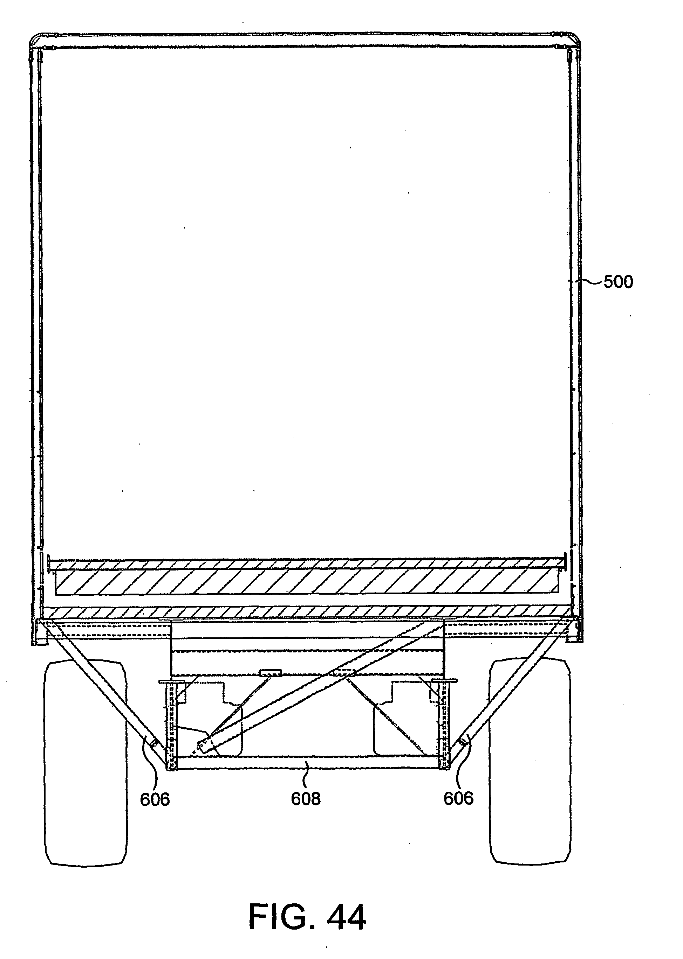

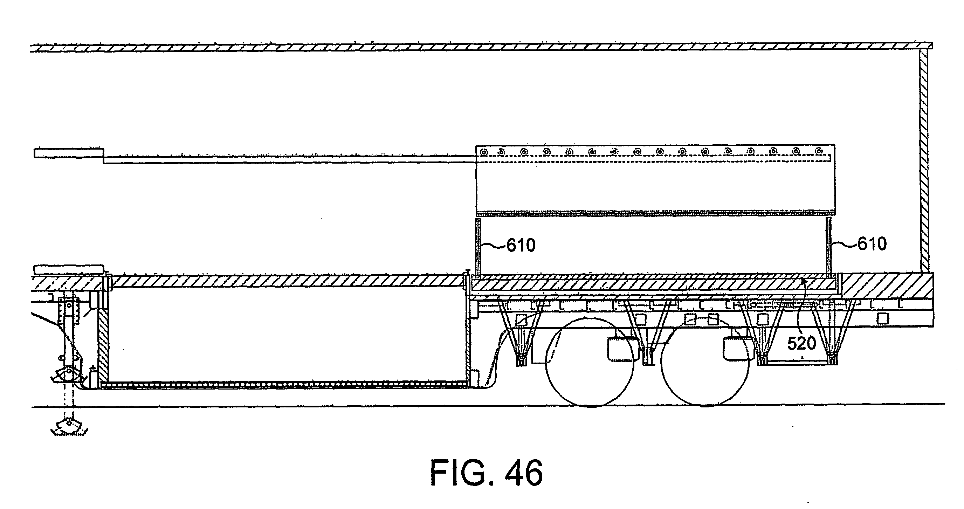

The trailer shown in figs 24 to 51 is similar in many respects to that shown in fig 23 and parts corresponding to parts in fig 23 carry reference numerals 100 higher than in fig. 23.

In fig 24, part of a trailer 500 in accordance with one aspect of the invention is shown. The trailer 500 has a pair of rear axles carrying wheels 510. The trailer body defines a well 514 immediately ahead of the rear axles which includes a well load platform 516 and a well platform lifting apparatus 518.

Behind the well 514, the trailer has a rear platform arrangement 520 similar to that of fig.23. The rear platform arrangement 520 comprises a vertically moveable rear platform 522 and a horizontally moveable rear platform 524. The rear platform arrangement can be lifted to a height that enables the horizontally moveable rear platform 524 to clear any pallets 528 stored in the well 514 by means of rear platform lifting apparatus 526.

The well platform lifting apparatus 518 and the rear platform lifting apparatus 526 are similar and only the operation of the rear platform lifting apparatus 526 will be described in detail.

The rear platform arrangement is lifted and lowered by the rear platform lifting apparatus 526 which comprises four inflatable bags 10 of the type described in figs.1 to 7, and particularly fig. 11, the bags being arranged beneath respective corners of the rectangular rear platform.

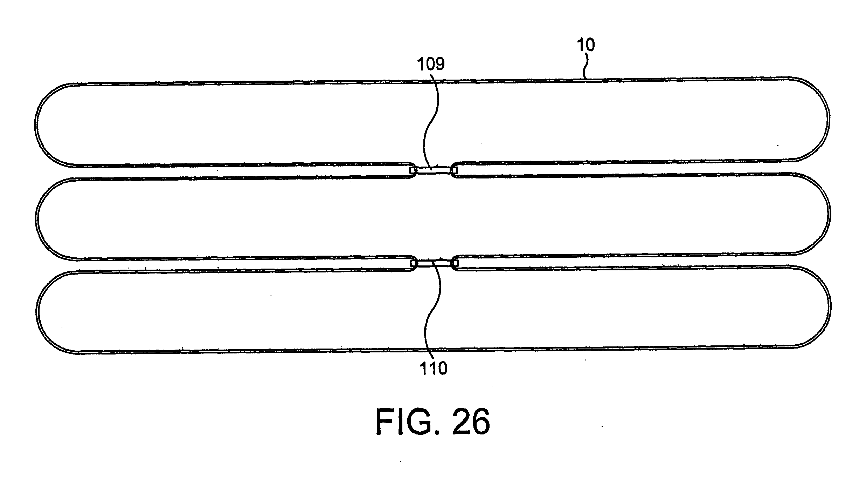

Each bag 10 comprises an endless loop made by rolling a flat sheet into an elongate tube and sealing the tube along a longitudinal seam. The tube is then folded into an endless loop and the overlapping ends are joined to form a seal around the hoop radius of the loop. Fig.26 shows, schematically, the configuration of each air bag 10. Each air bag 10 is folded into a series of concertina folds as in fig. 1 and retaining members or ties 109, 110 made from steel are secured around the waisted portions of the concertina folds to hold the bag in the folded configuration during inflation and deflation. A plate (not shown) may be provided in the wide middle part of the concertina further to assist in holding the concertina configuration.

Each bag 10 has an air inlet tube (not shown in figs 24 to 26) which is connected to a regulator valve which regulates, automatically, the inlet/outlet of compressed air into and out of the respective bag 10. An air compressor, such as the vehicle cab air compressor or an independent trailer mounted compressor supplies the compressed air to the regulator valves.

The operation of the lifting apparatus will be described in more detail below.

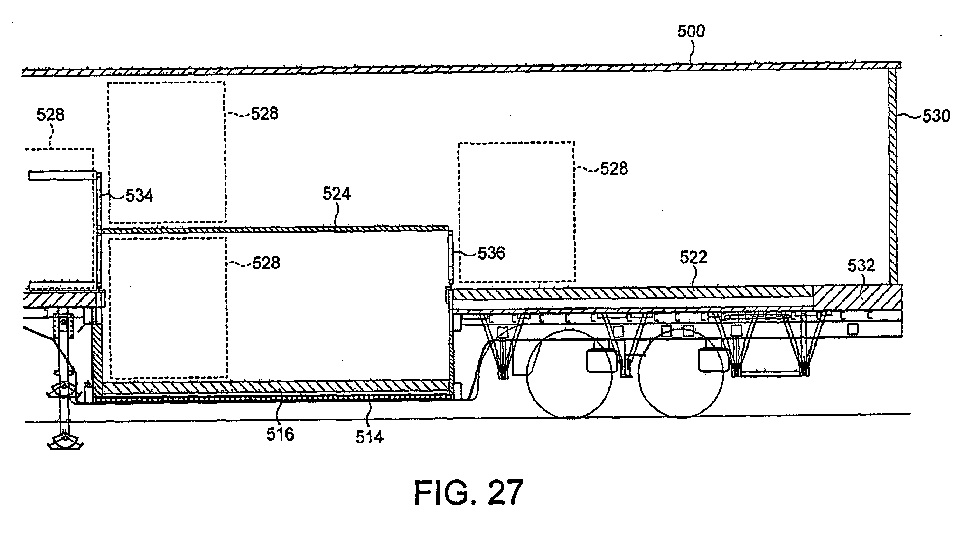

In fig.27, the trailer 500 is shown in its fully laden condition, although most of the pallets 528 have been omitted from the view for clarity. The trailer 500 includes a forward gate 534 and a rear gate 536. Each gate 534, 536 is mounted in hinged fashion to one side wall of the trailer. The forward gate 534 is mounted just ahead of the well 514. The rear gate 536 is mounted just behind the well 514. In the fully laden position, the well platform 516 is fully retracted into the well 514 and is laden with pallets. The front part of the trailer, forward of the well is laden with pallets 528. The rear horizontally moveable platform 524 is laden with pallets and lies above the well 514 and the rear vertically moveable platform 522 is in its load position (see below) and is also fully laden with pallets.

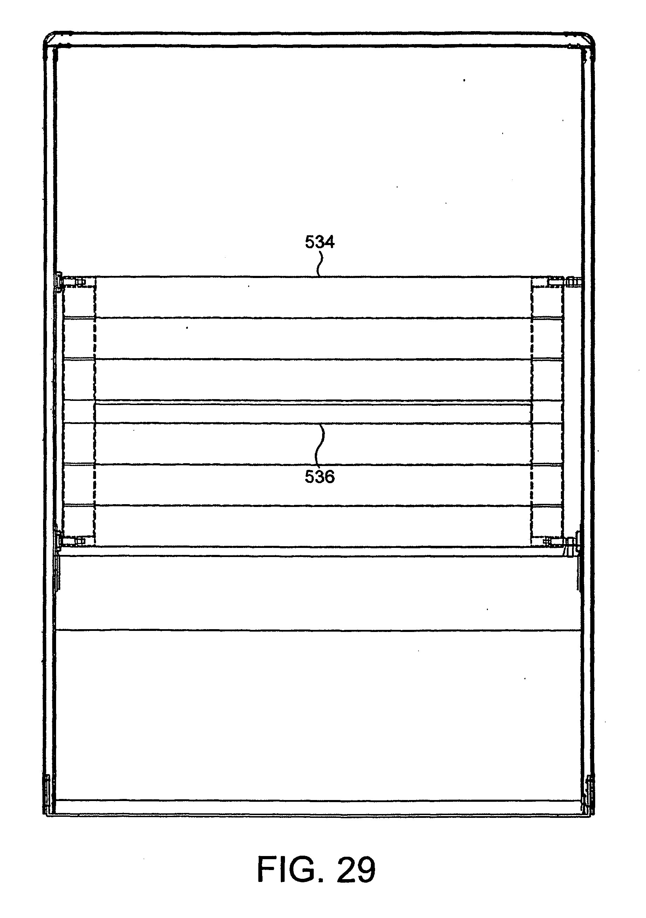

In that condition, the gates 534,536 are closed so that they extend transversely across the trailer and are latched by means of respective locking latches 538 to the side wall of the trailer opposite to the wall on which they are mounted. The gates partition off sections of the trailer and prevent the pallets stacked on the rear horizontally moveable platform 524 and the rear vertically moveable platform 522 from moving forward to damage pallets stacked further forward under heavy braking. Fig. 29 is an end view of the trailer showing the gates 534, 536 in the closed position. The gates can also assist with transmitting loads in cornering from one side of the trailer to the other.

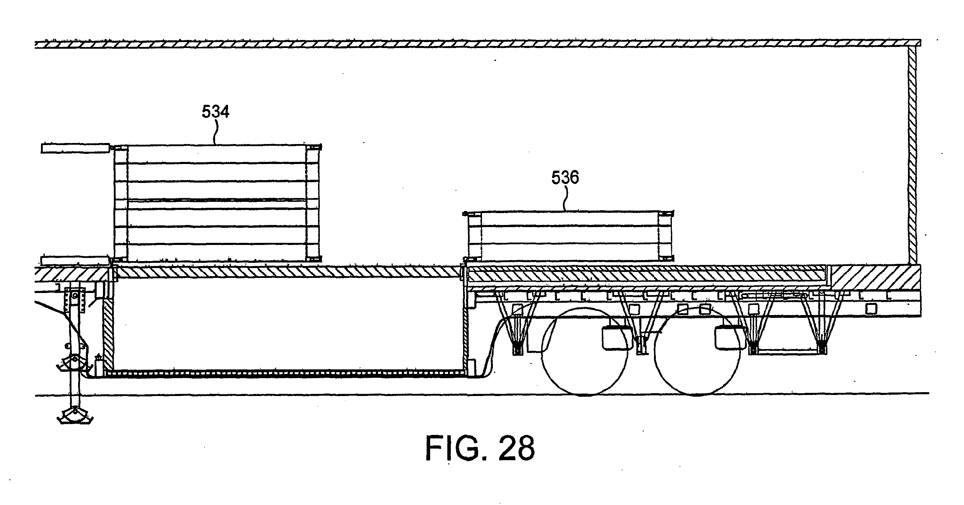

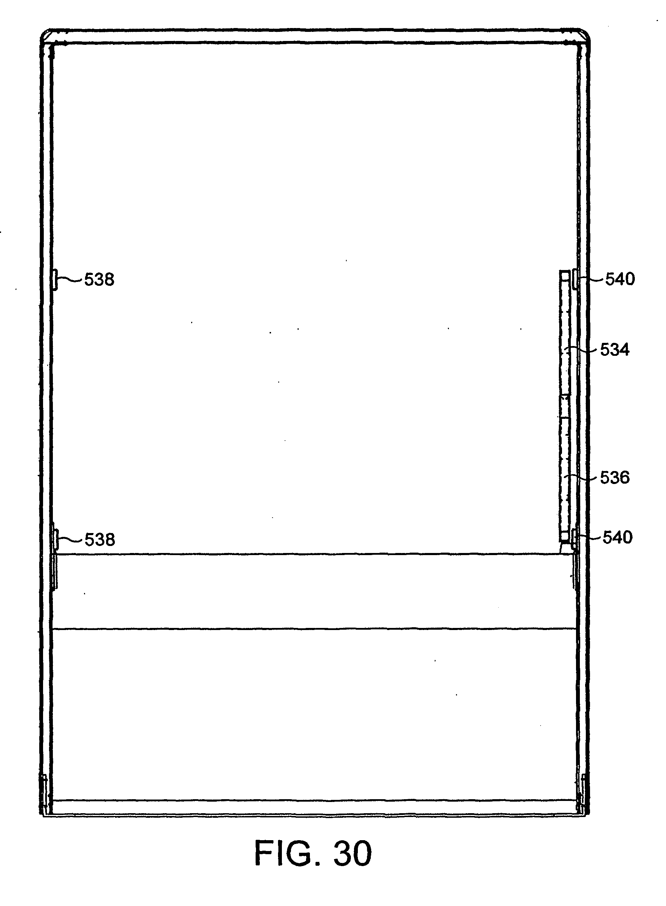

Figs. 28 and 30 show the gates 534, 536 in the open position. It can be seen from fig.30 that the gates lie flat against the wall of the trailer on which they are mounted so as not to interfere with the loading or unloading of the trailer. Securing latches 540 hold the gates 534, 536 in their open position to prevent them from swinging closed during loading or unloading.

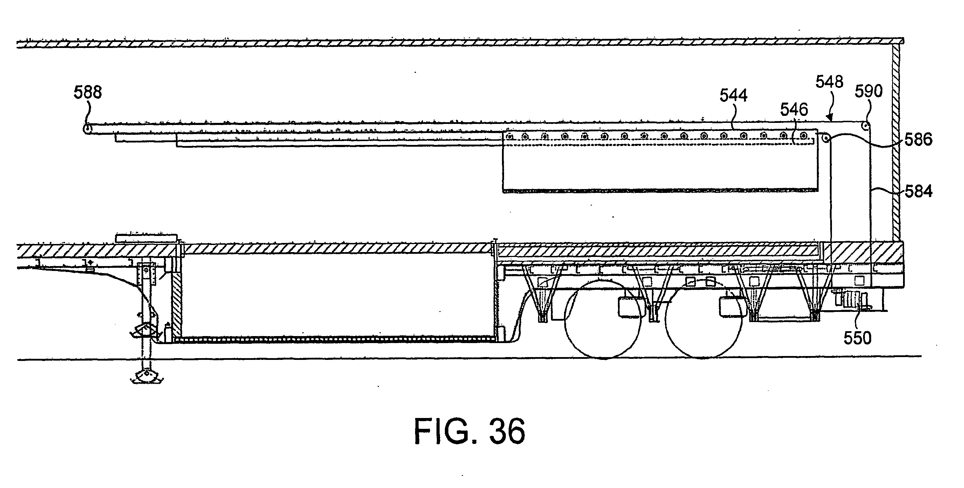

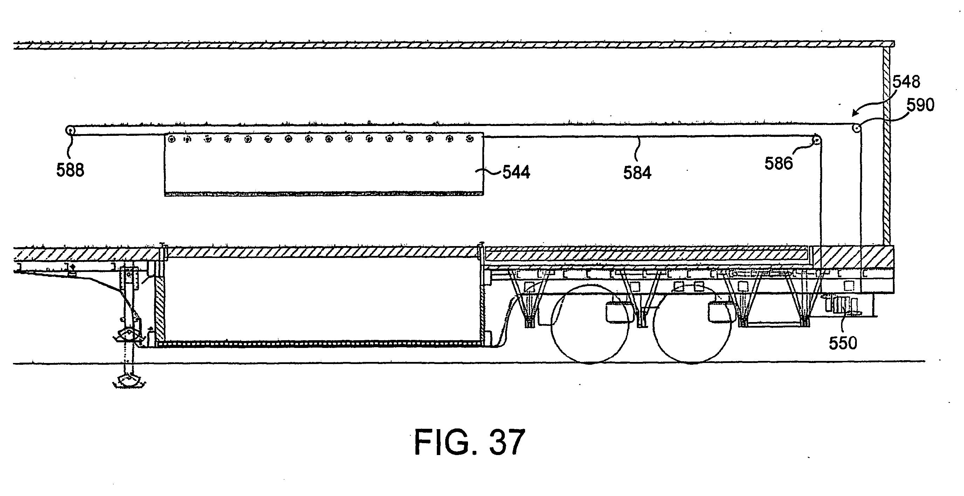

Figs. 31 to 37 illustrate the drive mechanism 542 for the rear horizontally moveable platform 524. The drive mechanism comprises carriages 544 on each side of the trailer which run along respective rails 546 and which are driven by means of a cable and pulley system 548 driven, in turn, by a motor 550 (see figs.36 & 37).

As shown in fig.31, the rails 546 extend from above the rear platform to a point above the front most part of the well 514.

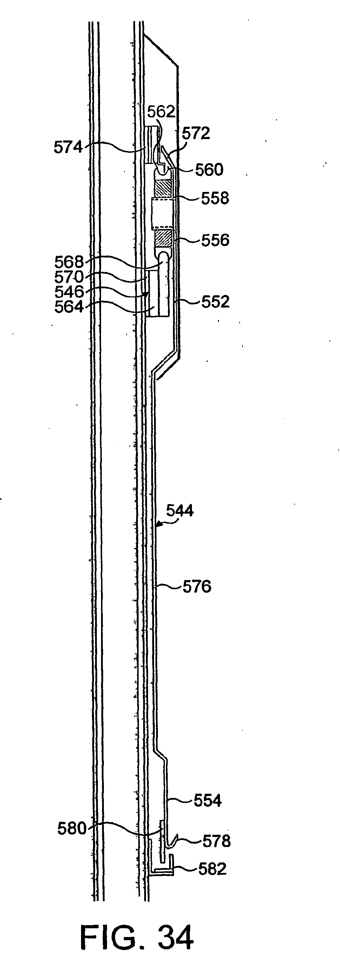

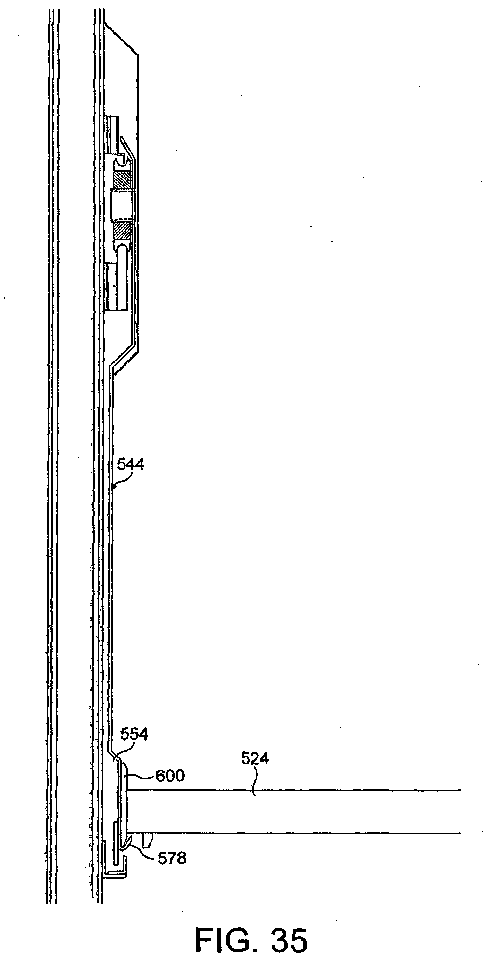

One of the carriages 544 is shown in more detail in figs.34 & 35. The carriage 544 shown comprises a runner portion 552 at the upper part thereof and a hook portion 554 at the lower part thereof.

The runner portion 552 comprises a runner plate 556, through which are located a series of runner axles 558. Runners 560 are mounted on respective runner axles 558. Each runner 560 comprises an annular body with a circumferential groove 562 formed around the outer circumference thereof. The groove 562 is dimensioned to be a snug, running fit around the rail 546.

The rail 546 comprises a lower rail part 564 and an upper rail part 566 spaced from the lower rail part, both of which are attached to the trailer wall. The lower rail part 564 comprises an upstanding rail 568 and a bracket part 570 for mounting the upstanding rail 568 to the trailer wall. The upper rail part comprises a depending rail guide 572 carried by a bracket part 574. The upstanding rail 566 is a snug running fit with the runner 560. The depending rail guide 572 is a loose fit with the runner 560 and is intended simply to prevent the runner 560 from being pulled off the rail by the weight of the platform.

A long carriage plate 576 extends downwardly from the runner plate 556 and the hook portion 554 is formed at the lower end of the carriage plate 576. The hook portion 554 kicks out away from the trailer wall from the base of the carriage plate 576. The hook portion comprises a hook 578 at the lower end thereof and a slider plate 580 which extends below the hook into a lower slide rail 582 mounted to the trailer wall.

Figures 36 and 37 show the cable and pulley system 548. The cable and pulley system 548 is driven by a motor 550, for example an electric motor located beneath the floor of the trailer 500 to one side thereof. A cable 584 of fixed length extends from the motor, up the trailer wall to a lower rear pulley 586 which is fixed to the trailer wall. The cable 584 bends around the lower rear pulley 586 and extends forwardly of the trailer 500 toward a forward pulley 588 which is mounted to the trailer wall at a point forward of the forwardmost end of the rail 546. Between the lower rear pulley and the forward pulley, the cable 584 is fixed to the carriage 544. The cable 584 bends around the forward pulley 588 and returns rearwardly along the trailer 500 to an upper rear pulley 590 which is mounted to the trailer wall at a point spaced rearwardly and above the lower rear pulley 586. The cable 584 then bends downwardly to the motor 550. A similar arrangement is provided on the opposite wall.

The motor 550 drives the cable 584 one way so that the carriage 544 is pulled forward along the rail 546 and the other way to pull the carriage rearwardly along the rail 546. The hook 578 of the hook portion 554 supports the horizontally moveable rear platform, as will be described in more detail below.

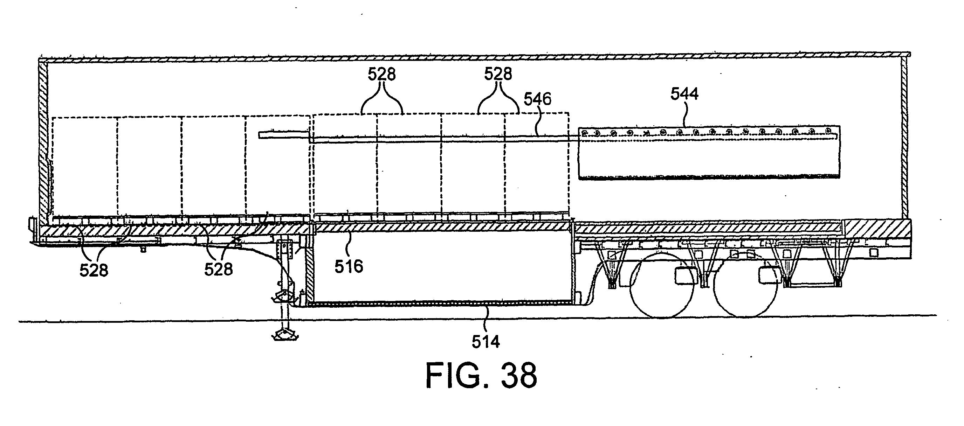

Figures 38 to 41 illustrate the loading process for the trailer 500. Reference will also be made to other figures which show the details of certain steps.

When the trailer 500 is completely unladen, the well load platform 516 lies at the base of the well 514 and the gates 534, 536 (see figs 27 to 30) are arranged in their open position, i.e. that shown in figs 28 and 30.

When it is desired to load the trailer, the well lifting apparatus 518 is activated to inflate the airbags 10 which support the well load platform 516. Airbags 10 are inflated so that the upper surface of the well load platform 516 is flush with the floor of the trailer forward of the well and the upper surface of the horizontally moveable rear platform 524 and the rear floor 532. Pallets 528 can then be loaded either using a forklift truck or a manually operated pallet barrow. Alternatively, in place of pallets, roll cages may be wheeled over the rear floor 532, the horizontally moveable rear platform 524, the well load platform 516 onto the floor of the trailer forward of the well 514. When that area is fully loaded, the gate 534 is moved to the closed position shown in figs 27 and 29.

Further pallets 528 are then loaded onto the well load platform 516 until the well load platform is fully loaded. That configuration is shown in fig 38. The well lifting apparatus is then controlled to lower the well load platform 516 into the well 514. The regulator valve attached to each airbag is arranged to allow air to escape from each airbag in a controlled fashion to effect that lowering. The detailed operation of the lifting apparatus for the platforms will be described below.

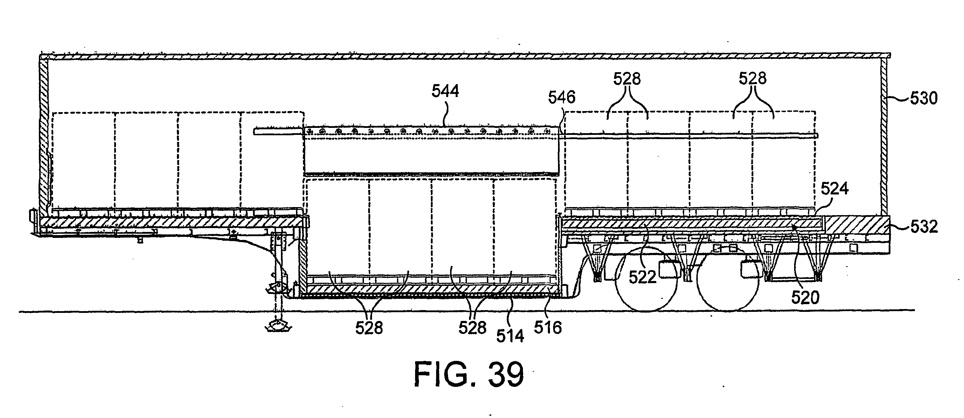

Once the well lifting platform 516 is lowered to the bottom of the well, the pulley and cable system 548 is operated to move the carriage 544 along the rail 546 until it reaches its forwardmost point. The carriage 544 is dimensioned and the rail 546 is positioned so that the lower most part of the carriage 544 clears the uppermost part of the pallets 528 in the well 514. The carriage 544 is also clear of the forwardmost point of the rear platform arrangement 520. The horizontally moveable rear platform 524 is then fully loaded with pallets 528 to arrive at the configuration shown in fig 39.

The rear platform lifting apparatus 526 is then operated to inflate the airbags 10 as shown in fig 24 to raise the rear platform arrangement.

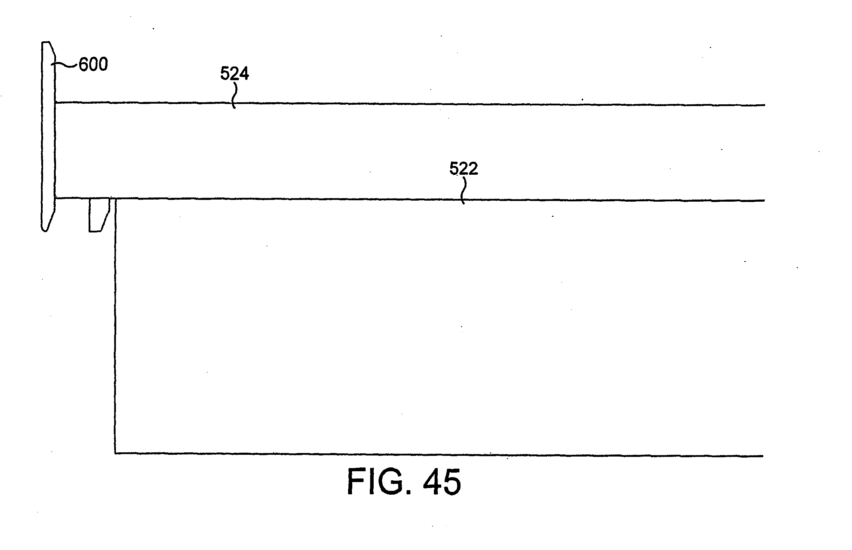

The airbags 10 raise the rear platform arrangement 520 to a vertical position such that the underside of the horizontally moveable rear platform has a vertical clearance above the hook portion 554 of the carriage 544. The cable and pulley system 548 is then driven by the motor 550 to move the carriage 544 rearwardly of the trailer 500 along the rail 546 so that the carriage reaches the rear most part of the rail 546. In that position, the hook 578 of the hook portion 554 of the carriage 544 is arranged directly beneath a hook receiving flange 600 on the edge of the horizontally moveable rear platform 524. (see fig 45). It will be noted from figure 45 that the horizontally moveable rear platform is significantly wider than the vertically moveable rear platform. That ensures that the vertical moveable rear platform 522 can clear the hook portion 554 of the carriage 544. The underside of the horizontally moveable rear platform 524 has a pair of guide fingers 601 spaced apart by a distance just greater than the width of the vertically moveable rear platform to guide that platform when the platforms are cornering together again.

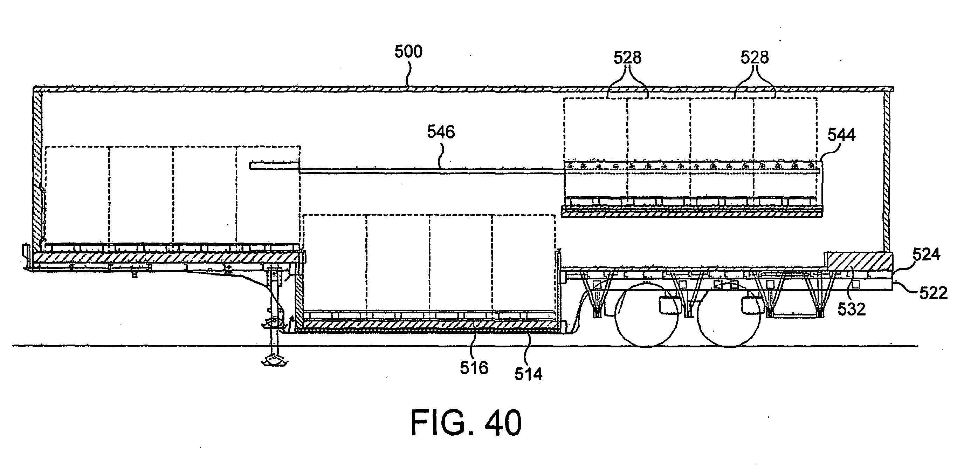

Once the carriage 544 is arranged in the rearmost position, the rear platform lifting apparatus is operated to allow the airbags 10 to inflate which in turn, causes the vertically moveable rear platform to be lowered. That lowers the horizontally moveable rear platform until the hook receiving flange 600 is supported by the hook 578 of the hook portion 554 of the carriage 544. That configuration is shown in fig 40. The vertically moveable rear platform 522 continues to be lowered by allowing air to escape from the airbags 10 until it moves clear of the underside of the horizontally moveable rear platform 524. The motor 550 of the cable and pulley system 548 is then operated to drive the carriage 544, which now carries the horizontally moveable rear platform 524 forwardly of the trailer 500. The vertically moveable rear platform continues to descend by deflation of the airbags 10 until it lies flush with the rear floor 532. The vertically moveable rear platform 522 is then locked in that position by virtue of a mechanism to be described below. The carriage 544 continues to move forward until the horizontally moveable rear platform 524 fully overlays the well 514 and does not protrude therefrom. The rear gate 536 can then be moved to its open position shown in figs 28 and 30 to its closed position shown in figs 27 and 29. The remainder of the trailer 500 can then be loaded with pallets (not shown).

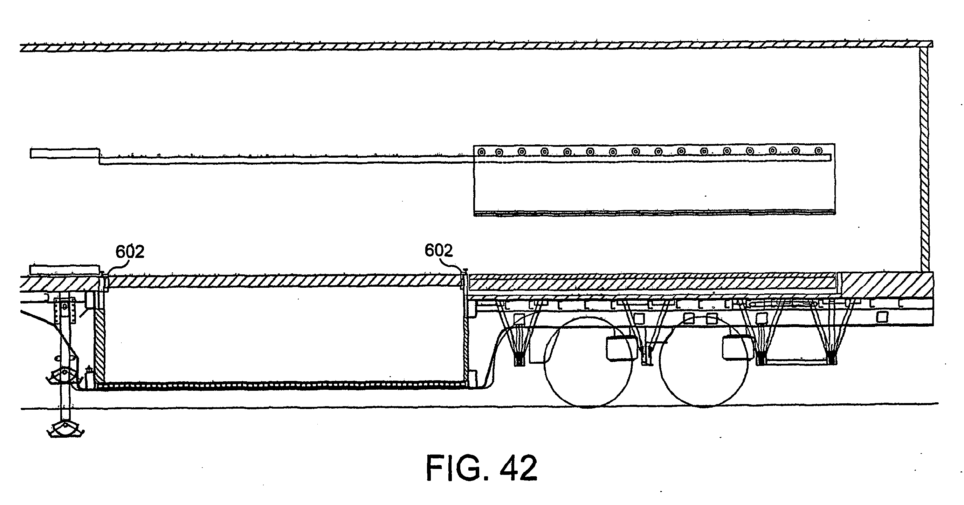

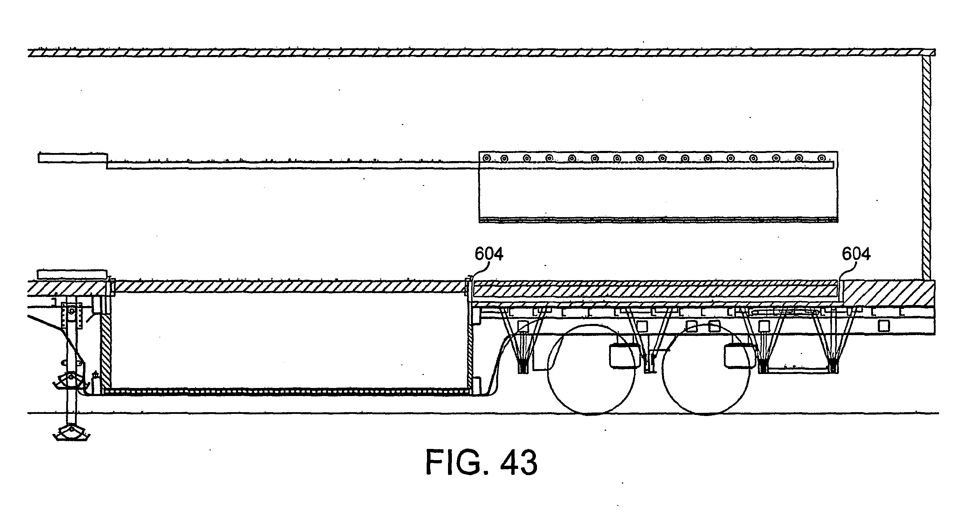

When the trailer 500 is being used in a conventional way, well load platform 516 can be raised to be flush with the floor of the trailer and can be locked off in that position, as shown in fig 42. In those circumstances, it is necessary to ensure that side forces on the well load platform 516 caused by cornering are transmitted into the trailer structure. In order to effect that, load transmitting wings 600 are provided which extend from the front and rear chassis structures and they contact the corners of the well load platform to transmit side forces into the chassis. A similar arrangement of wings 604 is provided to transmit the side forces of the rear platform arrangement 520 into the chassis (see fig 43).

The horizontally moveable rear platform 524 and the arrangement of carriages 544 on opposite sides of the trailer wall can provide significant additional loading on the trailer walls when the platform 524 is fully laden with pallets 528. In order to accommodate that extra weight and the additional forces that it creates when the vehicle is cornering, a series of cross braces 606 are connected between the side walls of the trailer 500 and the chassis 608 of the trailer 500.

The lifting of the rear platform arrangement 520 will now be described in detail. The gallery arrangement and automatic levelling arrangement described here below can also apply equally to the well lifting apparatus and platform 518, 516.

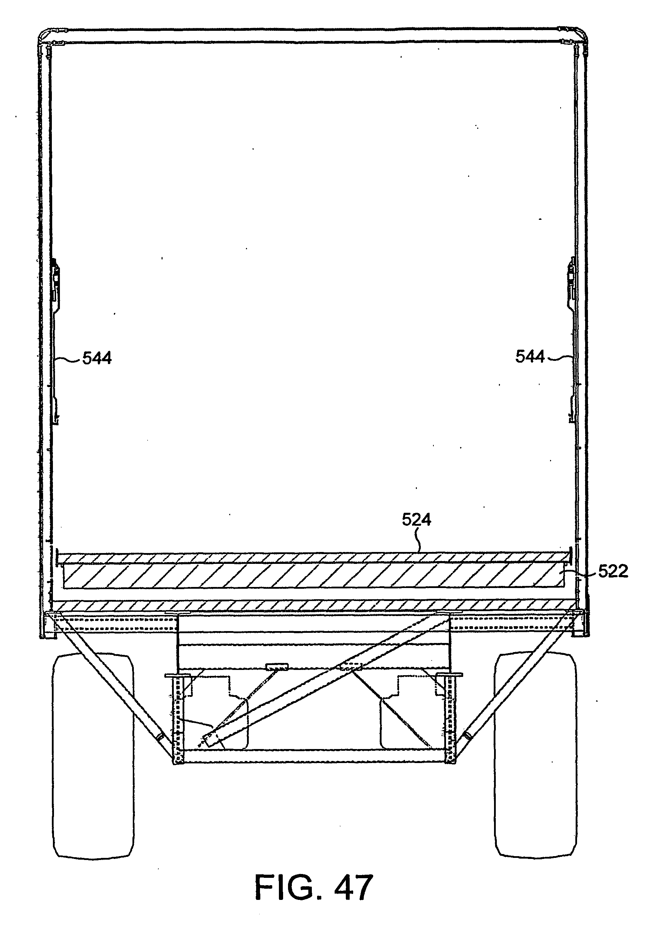

Firstly, vertical guiderails 610 are attached to the trailer walls adjacent the corners of the rear platform arrangement 520. Each of the corners of the vertically moveable rear platform 522 are connected to a position sensor, for example a potentiometer which measure linear position. A potentiometer of the type known as the Compact String Pot SP1 (trademark) sold by Celesco Transducer Products Inc. of Chatsworth, California, United States of America can be used to determine linear position up to a distance of 1200mm (approx). By determining the linear displacement of each corner of the platform relative a fixed datum, for example the floor of the trailer, the regulator valves for the airbags can be controlled appropriately to ensure level elevation or descent of the platform arrangement 520. If, for some reason, one corner of the platform has ascended more slowly than the rest then the position sensor will determine whether that corner has fallen behind and the control unit which controls the regulator valves will instruct the regulator valve of the airbag beneath that corner to allow more air into that airbag, thus remedying the imbalance. Fig 47 shows a rear view of the trailer 500 prior to inflation of the airbags 10 in the rear platform lifting apparatus 526. As stated above, it can be seen that the horizontally moveable rear platform 524 is rather wider than the vertically moveable rear platform 522. This is to enable the horizontally moveable rear platform to be captured by the hooks of the carriages 544 and to allow the vertically moveable rear platform 522 to descend clear of those hooks.

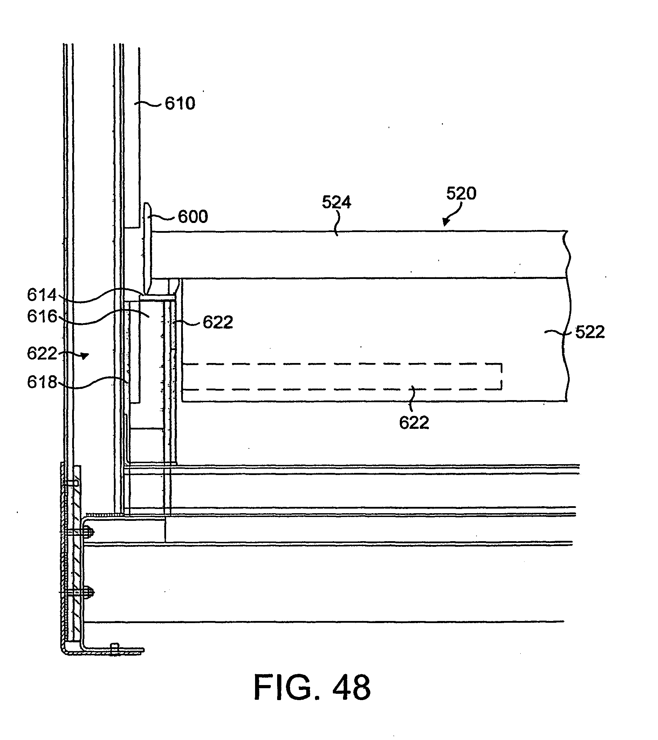

Figure 48 illustrates a support arrangement 612 for the rear platform arrangement 520. The support arrangement 612 comprises a support plate 614 on which the lower part of the hook receiving flange 600 rests. Plate 614 itself is supported on spring loaded members 616 (the spring not shown) arranged in a cylinder 618 which has an aperture 620 formed in the face thereof facing towards the rear platform arrangement 520.

The vertically moveable rear platform 522 includes a pneumatically operated spigot 622 which in the position shown in fig 48 is fully retracted.

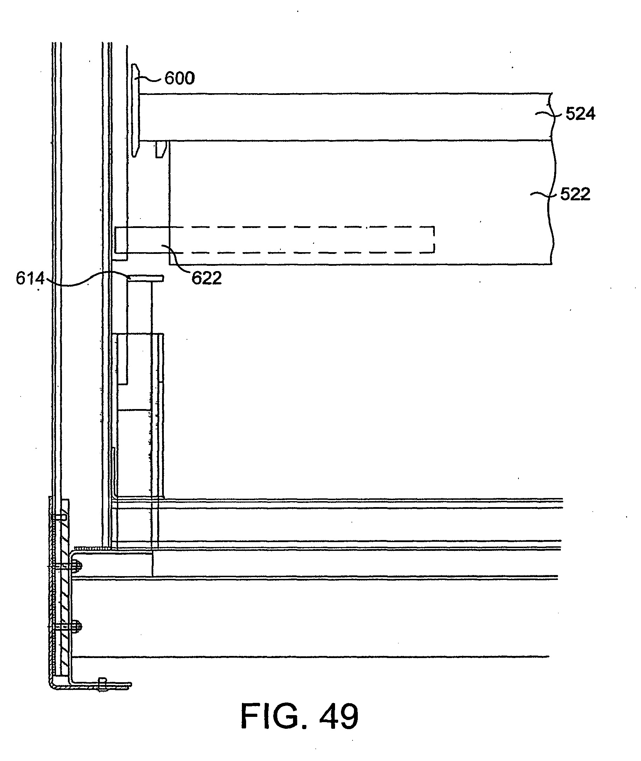

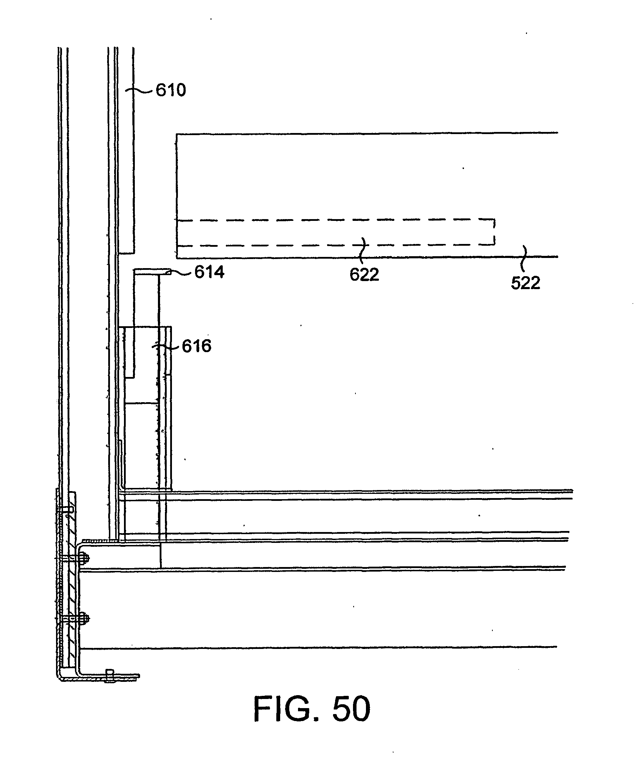

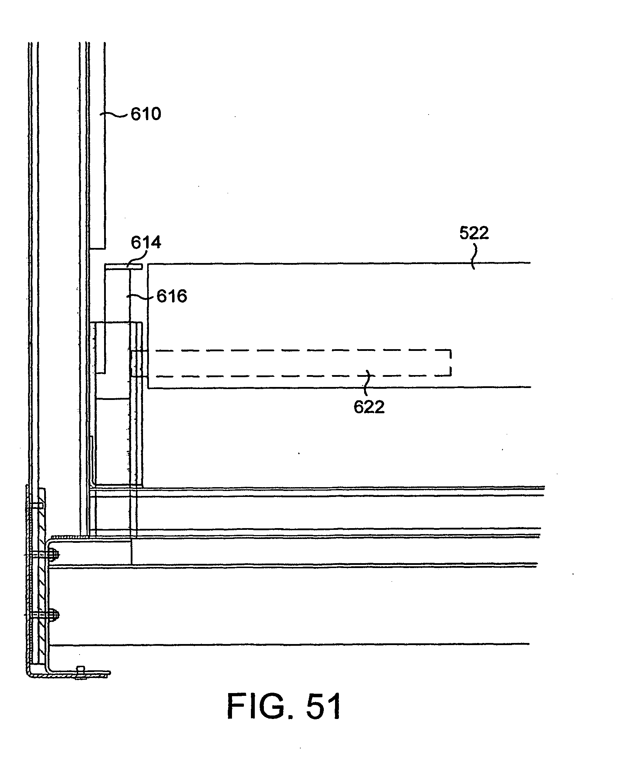

As shown in fig 49, as the airbags 10 inflate and the rear platform arrangement 520 is lifted, the arrangement moves away from the support plate 614. The pneumatically operated spigot 622 is actuated out of the vertically moveable rear platform 522. The end of the spigot 622 extends into the vertical guide 610 to effect vertical guiding of the platform arrangement 520. It will be appreciated that the arrangements shown in figs 48 and 49 is replicated at the other three corners of the platform arrangement 520. Although highly unlikely, in the event of a catastrophic failure of all four airbags 10, the spring loaded nature of the member 616 in the cylinder 618 will provide a degree of shock absorption should the platform arrangement 520 impact the support surface 614. The figures 50 and 51 illustrate the support arrangement 612 as the vertically moveable rear platform 522 descends after the horizontally moveable rear platform has been taken up by the carriages 544. On descent, the pneumatic system controlling the spigot 622 actuates the spigot 622 to retract it fully into the vertically moveable rear platform 522. Finally, as the vertically moveable rear platform descends to its loading position flush with the rear floor 532, the spigot 622 is actuated so that it passes into the aperture 620 in the cylinder 618 so as to provide a mechanical support for that platform 522. The support platform 614 and member 616 are arranged to that when the spring loading is fully unloaded, the upper surface of the support member 614 lies flush with the upper surface of the vertically moveable rear platform 522 which blocks off the gully that would otherwise exist along the side of the rear platform 520.

## Claims

1. An inflatable bag (10) for use in a load handling apparatus formed from an elongate tube having open ends (5), one end (5) of the tube being joined to the other end (5) of the tube so as to form an endless loop, the endless loop defining an inner volume, the bag comprising inlet means (41) arranged to allow admission of fluid into the inner volume, the bag being arranged to be inflated or deflated for lifting or lowering a load respectively.

2. An inflatable bag according to claim 1 in which the tube is formed from a single sheet of material (1) folded to form the elongate tube.

3. An inflatable bag according to claim 2 in which the side edges (2, 3) of the sheet (1) forming the tube are folded so that they overlap and a seal is formed by joining those side edges together in the region of the overlap.

4. An inflatable bag according to any of claims 1, 2 or 3 in which the ends (5) of the tube overlap and are bonded together at the overlap.

5. An inflatable bag according to any preceding claim in which the bonding is performed by heat welding, r.f. welding or glueing.

6. An inflatable bag according to any preceding claim in which the inlet means arranged to allow admission of fluid into the inner volume comprises part of the tube.

7. An inflatable bag according to any preceding claim in which a piece of reticulated material is received in the tube.

8. An inflatable bag according to claim 7 in which the reticulating material is received in the inlet means.

9. An inflatable bag according to any preceding claim in which the surface of the bag material is treated with a low friction finish.

10. An inflatable bag according to claim 9 in which the surface of the bag is embossed.

11. A method of making an inflatable bag (10) arranged to be inflated or deflated for lifting or lowering a load respectively, the method comprising the steps of providing a sheet (1) of suitable bag material, folding the sheet (1) of bag material into a tube such that one side edge of the sheet overlaps the opposite side edge of the sheet, joining the folded tube along the overlapping side edge so as to form an elongate tube with opposite ends (5) and an overlapping seam running longitudinally thereof, folding the elongate tube so that one end (5) thereof is tucked inside the other end thereof to form an overlap region, the folded elongate tube defining an endless loop having an inner volume, and forming a seam which seals off the inner region, the seam being formed in the overlap region.

## Patentansprüche

1. Ein aufpumpbarer Beutel (10) zur Verwendung in einer Lasthandhabungsvorrichtung, die aus einem langgestreckten Schlauch gebildet wird und mit offenen Enden (5) aufweist, wobei ein Ende (5) des Schlauches mit dem anderen Ende (5) des Schlauches verbunden ist, so dass hierdurch ein Endlosschlauch mit einem definierten inneren Volumen ausgebildet wird und der Schlauch mit einem Einlassmittel (41) versehen ist und so ausgebildet ist, dass hier durch ein Fluid in das innere Volumen eintreten kann und der Beutel ferner das Aufpumpen oder Entleeren hierdurch ermöglicht, um eine Last entweder anzuheben oder abzusenken.

2. Ein aufpumpbarer Beutel nach Anspruch 1, wobei der Schlauch aus einem einzelnen, bahnförmigen Material (1) besteht, welches zu einem lang gestreckten Schlauch gefaltet wird.

3. Ein aufpumpbarer Beutel nach Anspruch 2, wobei die Seitenkanten (2, 3) des bahnförmigen Materials (1), das den Schlauch ausbildet, derart gefaltet werden, dass diese sich überlappen und eine Dichtlippe ausbilden, indem die Seitenkanten im Bereich der Überlappung miteinander verbunden sind.

4. Ein aufpumpbarer Beutel nach einem der Ansprüche 1, 2 oder 3, wobei die Enden (5) des Schlauches im Bereich der Überlappung fest miteinander verbunden sind.

5. Ein aufpumpbarer Beutel nach einem der vorangehenden Ansprüche, wobei das fest miteinander Verbinden durch ein Wärmeschweißen erfolgt.

6. Ein aufpumpbarer Beutel nach einem der vorangehenden Ansprüche, wobei das Einlassmittel, für den Eintritt des Fluids in das innere Volumen des Schlauches, einen Teil des Schlauches umfasst.

7. Ein aufpumpbarer Beutel nach einem der vorangehenden Ansprüche, wobei ein Stück eines netzartig ausgebildeten Materials im Schlauch angeordnet ist.

8. Ein Beutel nach Anspruch 7, wobei das netzartige Material im Einlassmittel angeordnet ist.

9. Ein aufpumpbarer Beutel nach einem der vorangehenden Ansprüche, wobei die Oberfläche des Beutelmaterials eine geringe Friktion aufweist.

10. Ein aufpumpbarer Schlauch nach Anspruch 9, wobei die Oberfläche des Beutels erhaben ausgebildet ist.

11. Ein Verfahren zur Herstellung eines aufpumpbaren Beutels (10), ausgebildet ist, um entweder aufgepumpt oder entleert zu werden, um hierdurch eine Last entweder anzuheben oder abzulassen, das Verfahren umfasst die Schritte, Bereitstellen eines passenden Materials, bestehenden aus einem bahnförmigen Material (1), falten des bahnförmigen Materials (1), aus dem das Beutelmaterial besteht, zu einem Schlauch, so dass sich eine Seitenkante mit der anderen gegenüberliegenden Seitenkante des bahnförmigen Material überlappt, Verbinden des gefalteten Schlauches entlang der sich überlappenden Seitenkanten zu einem längs gestreckten Schlauch, ausbilden einer Einlegekante innerhalb des einen sich überlappenden Endes (5), wobei das andere Ende einen Überlappungsbereich ausbildet, falten des bahnförmigen Material zu einem längs gestreckten Endlosschlauch mit einem inneres Volumen, ausbilden eines Falzes im Überlappungsbereich, der den inneren Bereich abdichtet.

## Revendications

1. Poche gonflable (10) pour utilisation dans un appareil de préhension formé à partir d'un tube allongé ayant des extrémités ouvertes (5), une extrémité (5) du tube étant jointe à l'autre extrémité (5) du tube de façon à former une boucle sans fin, la boucle sans fin définissant un volume intérieur, la poche comprenant un moyen d'entrée (41) agencé pour permettre l'entrée de fluide dans le volume intérieur, la poche étant agencée pour être gonflée ou dégonflée pour respectivement soulever ou abaisser une charge.

2. Poche gonflable selon la revendication 1, dans laquelle le tube est formé à partir d'une feuille unique de matière (1) pliée pour former le tube allongé.

3. Poche gonflable selon la revendication 2, dans laquelle les bords latéraux (2, 3) de la feuille (1) formant le tube sont pliés de sorte qu'ils se chevauchent et un joint est formé en joignant ces bords latéraux ensemble dans la zone du chevauchement.

4. Poche gonflable selon l'une quelconque des revendications 1, 2 ou 3, dans laquelle les extrémités (5) du tube se chevauchent et sont liées ensemble au niveau du chevauchement.

5. Poche gonflable selon l'une quelconque des revendications précédentes, dans laquelle la liaison est effectuée par soudage à la chaleur, soudage à haute fréquence ou collage.

6. Poche gonflable selon l'une quelconque des revendications précédentes, dans laquelle le moyen d'entrée agencé pour permettre l'entrée de fluide dans le volume intérieur comprend une partie du tube.

7. Poche gonflable selon l'une quelconque des revendications précédentes, dans laquelle une pièce de matière réticulée est reçue dans le tube.

8. Poche gonflable selon la revendication 7, dans laquelle la matière de réticulation est reçue dans le moyen d'entrée.

9. Poche gonflable selon l'une quelconque des revendications précédentes, dans laquelle la surface de la matière pour poche est traitée avec un apprêt à faible friction.

10. Poche gonflable selon la revendication 9, dans laquelle la surface de la poche est estampée.

11. Procédé de fabrication d'une poche gonflable (10) agencée pour être gonflée ou dégonflée pour respectivement soulever ou abaisser une charge, le procédé comprenant les étapes de fourniture d'une feuille (1) de matière appropriée pour poche, de pliage de la feuille (1) de matière pour poche en un tube de sorte qu'un bord latéral particulier de la feuille chevauche le bord latéral opposé de la feuille, de jonction du tube plié le long du bord latéral chevauchant de façon à former un tube allongé avec des extrémités opposées (5) et une couture de chevauchement courant longitudinalement sur ce dernier, de pliage du tube allongé de sorte qu'une extrémité (5) de ce dernier est mise à l'intérieur de l'autre extrémité de ce dernier pour former une zone de chevauchement, le tube plié allongé définissant une boucle sans fin ayant un volume intérieur, et de formation d'une couture qui scelle la zone intérieure, la couture étant formée dans la zone de chevauchement.
